# EUROPEAN PATENT SPECIFICATION

(11) **EP 4 247 037 B1**
(45) Date of publication and mention of the grant of the patent: **21.10.2026**
(21) Application number: 20961107.8
(22) Date of filing: 12.11.2020
(51) Int. Cl.: H04W 16/26

(54) **UPLINK COVERAGE ENHANCEMENT METHOD AND APPARATUS, COMMUNICATION DEVICE AND STORAGE MEDIUM**
VERFAHREN UND VORRICHTUNG ZUR VERBESSERUNG DER UPLINK-ABDECKUNG, KOMMUNIKATIONSVORRICHTUNG UND SPEICHERMEDIUM
PROCÉDÉ ET APPAREIL D'AMÉLIORATION DE COUVERTURE DE LIAISON MONTANTE, DISPOSITIF DE COMMUNICATION ET SUPPORT DE STOCKAGE

(43) Date of publication of application: 20.09.2023
(73) Proprietor: Beijing Xiaomi Mobile Software Co., Ltd., Beijing 100085 (CN)
(72) Inventor: LIU, Yang, Beijing 100085 (CN)
(74) Representative: dompatent
(86) International application number: PCT/CN2020/128433
(87) International publication number: WO 2022/099550

(56) References cited:
- CN-A- 103 248 464
- CN-A- 108 270 525
- CN-A- 108 513 363
- CN-A- 111 294 152
- US-A1- 2020 228 250
- US-A1- 2020 260 391
- US-A1- 2020 260 391
- HUAWEI ET AL: "Discussion on HARQ enhancement for NTN", vol. RAN WG1, no. E-meeting; 20201026 - 20201113, 1 November 2020 (2020-11-01), XP052348925, Retrieved from the Internet <URL:https://ftp.3gpp.org/tsg_ran/WG1_RL1/TSGR1_103-e/Docs/R1-2007571.zip R1-2007571.docx> [retrieved on 20201101]

## Description

### TECHNICAL FIELD

The present disclosure relates to a field of wireless communication technologies, and particularly to a method and an apparatus for uplink coverage enhancement, a communication device and a storage medium.

### BACKGROUND

Based on simulation evaluations, a coverage enhancement needs to be performed on a channel of a frequency range 1 (FR1) in a new radio (NR) communication service, especially on a physical uplink shared channel (PUSCH). Enhancement solutions discussed in the existing standards are based on aspects such as, a time domain, a frequency domain, a demodulation reference signal (DMRS) and a power domain. A redundancy version (RV) repetition solution is a candidate solution based on the time domain that helps a receiver track a frequency and improves the accuracy of channel estimation. Of course, the RV repetition solution is also applicable to any generation of communication technology, which is not specifically limited in embodiments of the present disclosure.

However, in the related art, a fixed RV repetition solution is adopted, with a poor flexibility, which cannot satisfy enhancement coverage requirements in different scenarios.

US2020260391A1 discloses power control and retransmission.

HUAWEI ET AL: "Discussion on HARO enhancement for NTN", 3GPP DRAFT; R1-2007571, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. RAN WG1, no. E-meeting; 20201026 - 20201113 1 November 2020D2, discusses HARQ enhancement for NTN.

US2020228250A1 discloses redundancy versions in a HARQ process.

### SUMMARY

The scope of the invention is defined by the appended claims

### BRIEF DESCRIPTION OF THE DRAWINGS

The above and/or additional aspects and advantages of the present disclosure may become obvious and easy to understand from the following description of the embodiments in conjunction with the accompanying drawings.
FIG. 1 is a flowchart illustrating a method for uplink coverage enhancement according to an embodiment of the present disclosure.
FIG. 2 is a flowchart illustrating another method for uplink coverage enhancement according to an embodiment of the present disclosure.
FIG. 3 is a flowchart illustrating yet another method for uplink coverage enhancement according to an embodiment of the present disclosure.
FIG. 4 is a flowchart illustrating yet another method for uplink coverage enhancement according to an embodiment of the present disclosure.
FIG. 5 is a diagram illustrating a structure of an apparatus for uplink coverage enhancement according to an embodiment of the present disclosure.
FIG. 6 is diagram illustrating a structure of another apparatus for uplink coverage enhancement according to an embodiment of the present disclosure.
FIG. 7 is a schematic diagram illustrating a structure of a communication device in the present disclosure.

### DETAILED DESCRIPTION

The exemplary embodiments may be described in detail here, examples of which are shown in the accompanying drawings. When the following descriptions refer to the accompanying drawings, same numbers in different drawings represent same or similar elements unless otherwise indicated. The implementations described in the following exemplary embodiments do not represent all implementations consistent with embodiments of the present disclosure. Rather, they are merely examples of apparatuses and methods consistent with some aspects of the disclosure as detailed in the appended claims.

The terms described in the embodiments of the present disclosure are only for the purpose of describing specific embodiments and are not intended to limit the embodiments of the present disclosure. The singular forms "a"", "the" used in the embodiments of the disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in the embodiments of the present disclosure to describe various information, such information shall not be limited to these terms. These terms are only used to distinguish the same category of information. For example, subject to the scope of the embodiments of the present disclosure, first information may also be referred to as second information, and similarly, second information may also be referred to as first information. It depends on the context. For example, the word "in case of", "if" as used herein may be interpreted as "in a case that" or "when" or "in response to determining".

The embodiments of the present disclosure are described in detail below. Examples of the embodiments are shown in the accompanying drawing, in which the constant same or similar labels indicate the same or similar elements. The embodiments described below with reference to the accompanying drawings are exemplary, and are intended to explain the disclosure, but should not be understood as a limitation to the disclosure.

The method and the apparatus for uplink coverage enhancement, the communication device and the storage medium according to the present disclosure are described referring to attached drawings.

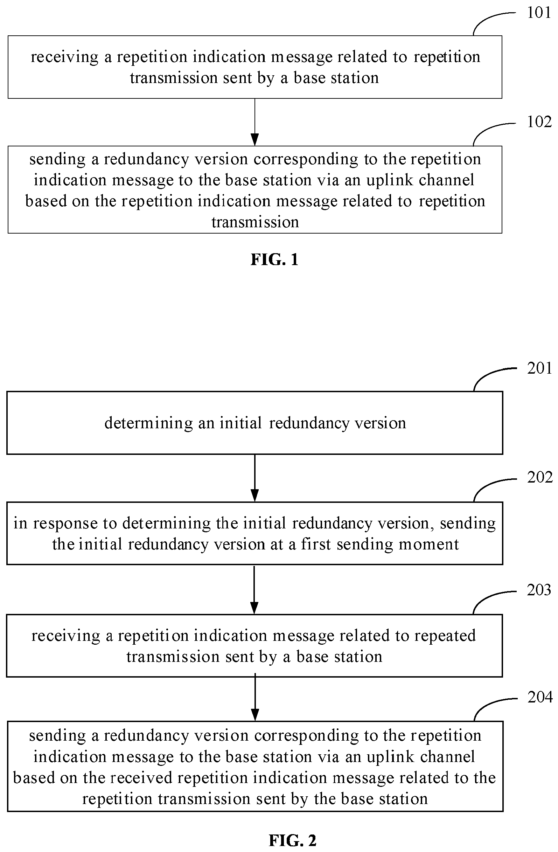

FIG. 1 is a flowchart illustrating a method for uplink coverage enhancement according to an embodiment of the present disclosure, which is applicable to a user equipment (UE).

As illustrated in FIG. 1, the method for uplink coverage enhancement includes the following steps.

At step 101, a repetition indication message related to repetition transmission sent by a base station is received.

The method for uplink coverage enhancement according to the embodiments of the present disclosure is applicable to any UE. The UE may refer to a device that provides voice connectivity and/or data connectivity for a user. The UE may communicate with one or more core networks through a radio access network (RAN). The UE may be an Internet of things terminal, for example, a sensor device, a mobile phone (or referred to as a cellular phone) and a computer having an internet of things terminal. For example, the UE may be a fixed, portable, compact, handheld, computer built-in or vehicle-mounted device. For example, the UE may be a station (STA), a subscriber unit, a subscriber station, a mobile station, a mobile, a remote station, an access point, a remote terminal, an access terminal, a user terminal, a user agent or a user equipment (UE). Alternatively, the UE may be a device of an unmanned vehicle. Alternatively, the UE may also be a vehicle-mounted device, for example, a vehicle-mounted computer with a wireless communication function, or a wireless user equipment externally connected to a vehicle-mounted computer. Alternatively, the UE may also be a roadside device, for example, a street lamp, a signal lamp or other roadside device with a wireless communication function.

The base station may include a plurality of cells that provide services for the UE. According to different specific application occasions, the base station may also be referred to as an access point, or may be a device in an access network that communicates with a wireless user equipment via one or more sectors on an air interface, or other names. The base station may be configured to interchange a received air frame and an Internet Protocol (IP) packet, as a router between a wireless UE and the rest part of the access network. The rest part of the access network may include an Internet Protocol (IP) communication network. The base station may further coordinate attribute management of the air interface. For example, the base station involved in the embodiments of the present disclosure may be a base transceiver station (BTS) in a global system for mobile communications (GSM) or a BTS in code division multiple access (CDMA)), or may be a NodeB in wide-band code division multiple access (WCDMA), or may be an evolutional Node B (eNB or e-NodeB) in a long term evolution (LTE) system, or may be a 5G base station (gNB) in a next generation system, or may be a home evolved Node B (HeNB), a relay node, a femto, and a pico, which is not limited in embodiments of the present disclosure. In some network structures, the base station may include a centralized unit (CU) node and a distributed unit (DU) node that may also be geographically separated for arrangement.

In the embodiment, the UE receives a repetition indication message sent by the base station. The repetition indication message is determined by the base station based on a channel quality or channel measurement of a physical uplink shared channel (PUSCH), and/or a decoding situation that is determined by uplink transmission obtained from the PUSCH, and the repetition indication message indicates a redundancy version (RV) that currently needs to be sent by the UE. In the embodiment, on the basis of the existing fixed RV repetition solution, a dynamic RV repetition solution is determined by the base station based on the measured channel quality, and/or a success situation of decoding and the dynamic RV repetition solution is sent in the repetition indication message to the UE, so that the UE not only may obtain enough redundancy information to achieve the enhancement coverage but also improve the transmission efficiency and reliability, based on the RV repetition solution included in the obtained repetition indication message.

As a possible implementation, the repetition indication message may be explicitly or implicitly sent by the base station via downlink control information (DCI) to the UE. The DCI is carried in a physical downlink control channel (PDCCH).

As another possible implementation, the repetition indication message may be sent by the base station via a medium access control (MAC) signaling to the UE.

At step 102, a RV corresponding to the repetition indication message is sent to the base station via an uplink channel based on the repetition indication message related to repetition transmission.

In all embodiments of the present disclosure, the RV refers to transmission of a version number corresponding to the RV.

In an NR communication service, in order to improve the reliability of ultra-reliable and low latency communication (URLLC), the UE sends an uplink transmission to the base station via an uplink (for example, a PUSCH). This may be repeated for a plurality of times to improve the reliability, and each time the uplink transmission is sent via the uplink, it may correspond to a corresponding RV. The RV is determined on the basis of the repetition indication message sent by the base station. The order of sending by the UE the RVs to the base station is based on a preset RV sequence. A plurality of RVs are included in the preset RV sequence, and are sequentially sent based on an arrangement order of each RV in the preset RV sequence, that is, the RV sent by the UE is an RV corresponding to one RV version number in the preset RV sequence. Redundancy information included in RVs corresponding to different RV version numbers may be same or different.

As a possible implementation, a plurality of RV version numbers are included in the preset RV sequence, for example, 1^{st} to N^{th} RV version numbers, and the 1^{st} to N^{th} RV version numbers are arranged in a preset order, where N is a positive integer, for example, N is 4 or 6, which is not limited in the embodiment.

For ease of description, the embodiment is illustrated by taking the number of RVs included in the preset RV sequence being 4 for an example, and when the number N is another number value, the principle is the same, which is not repeated in the embodiment.

As an implementation, when the number of the RVs is 4, the preset RV sequence is [0, 2, 3, 1], where 0, 2, 3 and 1 respectively correspond to version numbers of different RVs, and when the UE sends the RVs to the base station, the UE may send the RVs arranged in the preset order. In some possible environments, the RV sequence of [0, 2, 3, 1] has a good decoding performance but a poor self-decoding capability.

As another implementation, when the number N of RVs is 4, the preset RV sequence is [0, 3, 0, 3], where 0 and 3 respectively correspond to different RV version numbers, and when the UE sends an RV sequence to the base station, the UE may send the RVs arranged in the preset order.

Those skilled in the art may understand that the above preset order is merely illustrative, and is not limited to the protection scope of the present disclosure.

In some possible environments, a decoding performance and a self-decoding performance of the preset RV sequence [0, 3, 0, 3] are relatively balanced, and decoding performances of different RV sequences may be determined in a simulation experiment, or may be determined based on historical records in practical applications, which are not limited in the embodiment.

In some embodiments, when the UE sends the RV to the base station in a preset RV sequence, RVs included in the preset RV sequence are repeatedly sent to improve an effect of a receiver tracking a frequency, or improve the accuracy of channel estimation. That is, there is repetition transmission of RVs in an actual RV sequence sent by the UE to the base station via an uplink (for example, a PUSCH), which is referred to as an RV repetition sequence. However, a number of repetitions of each RV in the RV repetition sequence is same, and not dynamically changed. For example, for 16 repetitions included in the RV repetition sequence, the RV repetition sequence is {0, 0, 0, 0, 2, 2, 2, 2, 3, 3, 3, 3, 1, 1, 1, 1}. However, in the disclosure, the RVs in the RV repetition sequence sent by the UE to the base station are determined based on a repetition indication message sent by the base station. That is, one or more RVs in a transmission process are dynamically changed, instead of being fixed RVs that are preset. In some embodiments, a number of repetitions of the one or more RVs is also determined by the repetition indication message obtained from the base station, that is, the number of repetitions of each RV in the RV repetition sequence may be same or different. The number of repetitions of each RV in the RV repetition sequence may be preset, or may be dynamically configured by the base station. For example, the RV0 is transmitted for 5 repetitions, the RV2 is transmitted for 3 repetitions, the RV3 is transmitted for 2 repetitions, and the RV1 is transmitted for 6 repetitions, so that the RV repetition sequence is represented by {0, 0, 0, 0, 0, 2, 2, 2, 3, 3, 1, 1, 1, 1, 1, 1}.

In the embodiment, the UE sends an RV corresponding to a repetition indication message to the base station via a PUSCH. The corresponding RV is sent by the UE based on each sending moment. For example, when an RV version number sent by the UE to the base station at a previous sending moment is 3, the RV repetition sequence that has been sent by the UE to the base station at the previous sending moment is: 0, 0, 0, 2, 3, 3, and when an RV version number sent by the UE to the base station at a current sending moment is 1, the RV repetition sequence that has been sent by the UE to the base station at the current sending moment is: 0, 0, 0, 2, 3, 3, 1, so that a dynamically changing RV sequence is set based on the repetition indication message sent by the base station. Since the repetition indication message sent by the base station is determined based on a success situation of decoding and/or a channel quality, the accuracy of sending the RVs and determining a number of repetitions of the RVs is improved, and the uplink enhancement coverage is improved.

According to the method for uplink coverage enhancement in the embodiments of the disclosure, the UE receives the repetition indication message sent by the base station, and sends the RV corresponding to the repetition indication message to the base station via the PUSCH. Thus, a dynamically changing RV sequence is set on the basis of the repetition indication message sent by the base station. Since the repetition indication message sent by the base station is determined based on a success situation of decoding and a channel quality, the accuracy of an RV repetition solution is improved, and the enhancement coverage of the base station is improved.

In a possible application, the UE may determine initial RV information when sending the RVs to the base station, and further determines whether the RV is repeatedly sent based on the received repetition indication message sent by the base station. When it is determined that the RV is repeatedly sent, the UE determines a number of repetitions; and when it is determined that the RV is not repeatedly sent, the UE switches to transmit a next RV, which may improve the reliability of repeatedly sending the RV. For this purpose, a method for uplink coverage enhancement is provided in the embodiments of the present disclosure. It is illustrated how to determine an initial RV and an RV repetition solution, which reduces an overhead of the base station.

As illustrated in FIG. 2, the method may include the following steps.

At step 201, an initial RV is determined.

In all embodiments of the present disclosure, the RV refers to transmission of a version number corresponding to the RV.

In some embodiments, an initial RV may be determined based on an initial RV indication message received from the base station. In another embodiments, an initial RV may be determined based on a related communication standard, and for example, when a sending order of the RVs is determined in the related communication standard, the sending order of the RVs may be determined based on the communication standard, and the initial RV may be thus determined. In another embodiments, the initial RV may be determined based on a sending order determined by a negotiation between the base station and the UE. In some embodiments, a sending order of each RV may be determined based on configuration information stored in the UE, where the configuration information may be sent by the base station to the UE in advance, or may be prestored in the UE.

In some embodiments, the initial RV may be determined based on the initial RV indication message received from the base station. The initial RV indication message indicates an RV initially sent by the UE to the base station based on the preset RV sequence. That is, the initial RV indication message indicates from which RV the UE starts sending to the base station based on the RV sequence.

It should be noted that, in an embodiment of the present disclosure, the initial RV indication message is determined by the base station based on a detected transmission state with the UE. The transmission state may be divided into a new transmission station and a repetition transmission state, and the initial RV indication message has a corresponding relationship with the transmission state. Therefore, in order to facilitate distinguishing, when the transmission state is a new transmission state, a first initial RV indication message may be sent to the UE. The first initial RV indication message is configured to indicate the UE to send the RV0 at a first sending moment. When the transmission state is a repetition transmission state, a non-first initial RV indication message may be sent to the UE based on a number of transmission repetitions.

In the embodiment, if the terminal sends a new packet to the base station, it indicates a new transmission state, and if the packet fails to be received or decoded, the packet may be transmitted for a plurality of repetitions, that is, a repetition transmission state is entered. A number of transmission repetitions has a corresponding relationship with an RV in the adopted preset RV sequence. In order to facilitate distinguishing, in the embodiment, an initial RV indication message corresponding to the new transmission state between the base station and the UE is referred to as a first initial RV indication message. When a number of transmission repetitions is one (that is, the second repetition transmission), a corresponding initial RV indication message is referred to as a second initial RV indication message. When a number of transmission repetitions is two (that is, the third repetition transmission), an initial RV indication message corresponding to the third repetition transmission is referred to as a third initial RV indication message, and so forth, which are not listed in the embodiment. RVs indicated by different initial RV indication messages may be same or different.

As a possible implementation, the initial RV indication message may be sent by the base station via DCI sent to the UE. The DCI is carried in a PDCCH. The base station sends the initial RV indication message via 2 bits reserved in the DCI.

For example, if the preset RV sequence is [0, 2, 3, 1], there are 4 initial RV indication messages. For example, when the UE receives DCI00 sent by the base station via the DCI, DCI00 corresponds to a first initial indication message, when the UE receives DCI01 sent by the base station via the DCI, DCI01 corresponds to a second initial indication message, when the UE receives DCI10 sent by the base station via the DCI, DCI10 corresponds to a third initial indication message, and when the UE receives DCI11 sent by the base station via the DCI, DCI11 corresponds to a fourth initial indication message,

It should be noted that, when the number of RVs included in the preset RV sequence is another number value, the principle is the same, which is not repeated in the embodiment.

At step 202, in response to determining the initial RV, the initial RV is sent at a first sending moment.

In an embodiment of the present disclosure, the preset RV sequence is [0, 2, 3, 1]. For example, when a connection between the base station and the UE is the new transmission state, the initial RV indication message determines the initial RV as the RV0, and the initial RV sent by the UE to the base station at the first sending moment is the RV0. When the new transmission between the UE and the base station fails, a first repetition transmission is performed, that is, a number of transmission repetitions is one, the initial RV indication message determines the initial RV as the RV2, and the initial RV sent by the UE to the base station is the RV2. When the second repetition transmission is performed between the UE and the base station, that is, a number of transmission repetitions is two, the initial RV indication information determines the initial RV as the RV3, and the initial RV sent by the UE to the base station is the RV3. When a third repetition transmission is performed between the UE and the base station, that is, a number of transmission repetitions is three, the initial RV indication information determines the initial RV as the RV1, and the initial RV sent by the UE to the base station is the RV1.

It should be noted that, when the preset RV sequence is [0, 3, 0, 3], its principle of determining an initial RV is same as that when the above preset RV sequence is [0, 2, 3, 1], which is not repeated in the embodiment.

At step 203, a repetition indication message related to repetition transmission sent by a base station is received.

It needs to be noted that the method for uplink coverage enhancement according to the embodiments of the present disclosure is applicable to any UE. The UE may refer to a device that provides voice connectivity and/or data connectivity for a user. The UE may communicate with one or more core networks through a radio access network (RAN). The UE may be an Internet of things terminal, for example, a sensor device, a mobile phone (or referred to as a cellular phone) and a computer having an internet of things terminal. For example, the UE may be a fixed, portable, compact, handheld, computer built-in or vehicle-mounted device. For example, the UE may be a station (STA), a subscriber unit, a subscriber station, a mobile station, a mobile, a remote station, an access point, a remote terminal, an access terminal, a user terminal, a user agent or a user equipment (UE). Alternatively, the UE may be a device of an unmanned vehicle. Alternatively, the UE may also be a vehicle-mounted device, for example, a vehicle-mounted computer with a wireless communication function, or a wireless user equipment externally connected to a vehicle-mounted computer. Alternatively, the UE may also be a roadside device, for example, a street lamp, a signal lamp or other roadside device with a wireless communication function.

In the embodiment, the UE receives the repetition indication message sent by the base station. The repetition indication message is determined by the base station based on the channel quality of the PUSCH, and/or whether PUSCH decoding is successful, which indicates an RV that currently needs to be sent. In the embodiment, on the basis of the existing fixed RV repetition solution, a dynamic RV version repetition solution is determined by the base station based on the measured channel quality and the success situation of decoding and the dynamic RV repetition solution is sent in the repetition indication message to the UE, so that the UE not only may obtain enough redundancy information to achieve the enhancement coverage but also improve the efficiency, based on the RV repetition solution included in the obtained repetition indication message.

As a possible implementation, the repetition indication message may be sent by the base station via DCI sent to the UE. The DCI is carried in a PDCCH.

As another possible implementation, the repetition indication message may be sent by the base station via a MAC signaling to the UE.

At step 204, a RV corresponding to the repetition indication message is sent to the base station via an uplink channel based on the received repetition indication message related to the repetition transmission sent by the base station.

In an NR communication service, in order to improve the reliability of ultra-reliable and low latency communication (URLLC), the UE sends an uplink transmission to the base station via an uplink channel (for example, a PUSCH). This may be repeated for a plurality of times to improve the reliability, and each time the uplink transmission is sent via the PUSCH, it may include a corresponding RV. The RV is determined on the basis of the repetition indication message sent by the base station. The UE sends the RVs to the base station based on the preset RV sequence. A plurality of RVs are included in the preset RV sequence, and are sequentially sent based on an arrangement order of the plurality of RVs, that is, the RV sent by the UE may be an RV corresponding to one RV version number in the preset RV sequence. Redundancy information included in the RVs corresponding to different RV version numbers may be same or different, which is not limited in the embodiment.

As a possible implementation, the plurality of RV version numbers included in the preset RV sequence include 1^{st} to N^{th} RV version numbers, and the 1^{st} to N^{th} RV version numbers are arranged in a preset order, where N is a positive integer, for example, N is 4 or 6, which is not limited in the embodiment.

For ease of description, the embodiment is illustrated by taking the number of RVs included in the preset RV sequence being 4 for an example, and when the number N is another number value, the principle is the same, which are not repeated in the embodiment.

As an implementation, when the number N of RVs is 4, the preset RV sequence is [0, 2, 3, 1], where 0, 2, 3 and 1 respectively correspond to different RV version numbers, and when the UE sends the RVs to the base station, the UE may send the RVs arranged in the preset order. In some environments, the RV sequence [0, 2, 3, 1] has a good decoding performance but a poor self-decoding capacity.

As an example, when the number N of RVs is 4, the preset RV sequence is [0, 3, 0, 3], where 0 and 3 respectively correspond to different RV version numbers, and when the UE sends RVs to the base station, the UE may send the RVs arranged in the preset order. In some possible environments, an RV sequence decoding performance and a self-decoding performance of [0, 3, 0, 3] are relatively balanced, and decoding performances of different RV sequences may be determined in a simulation experiment, or may be determined based on historical records in practical applications, which are not limited in the embodiment.

It needs to be noted that, those skilled in the art may understand that the preset order in the embodiment is merely illustrative, and is not limited to the protection scope of the present disclosure.

In some scenarios, when the UE sends RVs to the base station in the preset RV sequence, RVs included in the preset RV sequence are repeatedly sent. In some scenarios, such a sending way may improve an effect of a receiver tracking a frequency, or improve the accuracy of channel estimation. That is, there is repetition transmission of RVs in an actual RV sequence sent by the UE to the base station via a PUSCH, which is referred to as an RV repetition sequence. However, a number of repetitions of each RV in the RV repetition sequence is same, and not dynamically changed. For example, for 16 repetitions included in the RV repetition sequence, the RV repetition sequence is {0, 0, 0, 0, 2, 2, 2, 2, 3, 3, 3, 3, 1, 1, 1, 1}. However, in the disclosure, the RVs in the RV repetition sequence sent by the UE to the base station are determined based on the repetition indication message sent by the base station. That is, one or more RVs in a transmission process are dynamically changed, instead of being fixed RVs that are preset. In some embodiments, a number of repetitions of the one or more RVs is also determined by the repetition indication message obtained from the base station, that is, the number of repetitions of each RV in the RV repetition sequence may be same or different. The number of repetitions of each RV in the RV repetition sequence may be preset, or may be dynamically configured by the base station. For example, the RV0 is transmitted for 5 repetitions, the RV2 is transmitted for 3 repetitions, the RV3 is transmitted for 2 repetitions, and the RV1 is transmitted for 6 repetitions, so that the RV repetition sequence is represented by {0, 0, 0, 0, 0, 2, 2, 2, 3, 3, 1, 1, 1, 1, 1, 1}.

In the embodiment, the UE sends an RV corresponding to a repetition indication message to the base station via a PUSCH. The corresponding RV is sent by the UE based on each sending moment. For example, when an RV version number sent by the UE to the base station at a previous sending moment is 3, the RV repetition sequence that has been sent by the UE to the base station at the previous sending moment is: 0, 0, 0, 2, 3, 3, and when an RV version number sent by the UE to the base station at a current sending moment is 1, the RV repetition sequence that has been sent by the UE to the base station at the current sending moment is: 0, 0, 0, 2, 3, 3, 1, so that a dynamic changing RV sequence is set based on the repetition indication message sent by the base station. Since the repetition indication message sent by the base station is determined based on a success situation of decoding and/or a channel quality, the accuracy of determining a number of sending the RVs and determining a number of repetitions of the RVs is improved, and the uplink enhancement coverage is improved.

It needs to be noted that, after the UE sends an initial RV corresponding to an initial repetition indication message sent by the UE to the base station via a PUSCH, it is determined based on the obtained indication message related to repetition transmission sent by the base station, whether the initial RV is repeatedly sent or is switched to the next RV in the RV sequence based on a preset RV order.

In an embodiment of the present disclosure, it may be determined based on the obtained indication message related to repetition transmission sent by the base station. When the base station sends the indication message related to repetition transmission each time, the indication message related to repetition transmission carries information of an RV to be sent. In some embodiments, the indication message related to repetition transmission may directly indicate an RV corresponding to a RV version number that currently needs to be transmitted by the UE to the base station. The RV includes redundancy information.

As a possible implementation, a repetition indication message is sent via 2 bits in the DCI. For example, when the repetition indication message indicates an RV with an RV version number of 3, the value of 2 bits in the DCI is 11. Then, when the base station sends a repetition indication message each time, signaling of 2 bits is consumed. For example, when the base station sends the repetition indication message for 16 times, that is, a number of repetitions of the RVs is 16, and the overhead of the base station is 16 * 2 = 32 bits. In this case, the overhead of the base station is large, which affects an overall performance of the base station.

Therefore, in another possible implementation of the embodiments of the present disclosure, in order to reduce the signaling overhead of the base station, the base station may indicate an RV corresponding to a current moment by setting a repetition indication identifier. The repetition indication identifier indicates whether an RV to be sent is an RV corresponding to a previous moment to be repeatedly sent, or a next RV to which it is switched. The repetition indication identifier may be achieved by one bit. For example, the identifier is 1, which indicates that the RV sent at the previous moment is not repeatedly sent, but sequentially switched to the next RV; the identifier is 0, which indicates that the RV at the previous moment is repeatedly sent. For example, if the base station sends the repetition indication message for 16 times, that is, a number of repetitions of the RVs is 16, the overhead of the base station is 1 * 16 = 16 bits, which reduces the signaling overhead of the base station and improves the overall performance of the base station.

In the embodiment, as a possible implementation, the repetition indication identifier obtained by the UE may be included in the obtained repetition indication message, that is, the repetition indication message includes the repetition indication identifier. As another possible implementation, the repetition indication identifier may be sent when DCI is triggered or MAC is triggered.

The following is specifically described by means of different implementations.

In a possible implementation of embodiments of the present disclosure, the repetition indication message includes the repetition indication identifier. The UE acquires an ith RV sent at a previous sending moment, where i is a positive integer less than or equal to N; when the repetition indication identifier indicates repeating, the i^{th} RV is repeatedly sent at the current sending moment; and when the repetition indication identifier indicates stopping repeating, an (i +1)^{th} RV is determined based on a preset order, and the (i +1)^{th} RV is sent at the current sending moment.

As a possible implementation, the repetition indication identifier may be indicated by one preset bit in the DCI to indicate whether the UE repeatedly sends the RV sent at the previous moment. For example, the repetition indication message is sent by two bits A and B preset in the DCI, and the repetition indication identifier may be indicated by one bit D in the DCI, which reduces the signaling consumption of the base station by one bit. For example, the bit D is identified as a first value (for example, 1 or 0), which indicates that the RV sent at the previous moment is not repeatedly sent, but sequentially switched to the next RV, and the bit D is identified as a second value (for example, 0 or 1, different from the first value), which indicates that the RV sent at the previous moment is repeatedly sent, so that whether the RV is repeatedly sent may be determined based on an indication of the base station, and a number of repetitions of the RV may be determined, which improves the flexibility and accuracy of sending the RVs.

As a possible implementation, the repetition indication identifier may be indicated by one preset bit in the DCI to indicate whether the UE repeatedly sends the RV sent at the previous moment. For example, the repetition indication message is sent by two preset bits A and B in the DCI, and the repetition indication identifier may be indicated by one bit A or B in the DCI, which reduces the signaling consumption of the base station by one bit.

It should be noted that, one bit for indicating the repetition indication identifier in the DCI is different from the bit for indicating the initial RV indication message in the DCI.

In another possible implementation of embodiments of the present disclosure, the repetition indication identifier may be carried in a new signaling sent when the DCI is triggered or the MAC is triggered. The new signaling is a repetition indication message, and the i^{th} RV sent at the previous sending moment is obtained, where i is a positive integer less than or equal to N. In some embodiments, it is determined whether the repetition indication identifier is received at the current sending moment. In response to receiving the repetition indication identifier, the (i +1)^{th} RV is determined based on the preset order, and the (i +1)^{th} RV is sent at the current sending moment. In another embodiments, in response to not receiving the repetition indication identifier, the i^{th} RV is repeatedly sent at the current sending moment. According to the solution, whether the RV is repeatedly sent may be determined based on an indication of the base station, and a number of repetitions of the RVs may be determined, thus improving the flexibility and accuracy of sending the RVs.

It should be noted that the above embodiment of receiving the repetition indication identifier and the above embodiment of not receiving the repetition indication identifier are two independent embodiments. The two embodiments may be implemented independently or may be implemented together, which are not limited in the embodiment of the present disclosure.

The repetition indication identifier received by the UE may be indicated based on a DCI trigger message or indicated based on a MAC trigger information, which are illustrated by different implementations.

As a possible implementation, the received repetition indication identifier, sent by the base station to the UE, may be obtained based on a trigger message of DCI. In some embodiments, when the trigger message is received, that is, the repetition indication identifier is received, it is considered to indicate that at the current moment, an RV sent at the previous moment is not repeatedly sent, but is sequentially switched to the next RV. In another embodiments, when the trigger message is not received, that is, the repetition indication identifier is not received, it indicates that the RV sent at the previous moment is repeatedly sent at the current moment. According to the solution, whether the RV is repeatedly sent may be determined based on an indication of the base station, and a number of repetitions of the RVs may be determined, thus improving the flexibility and accuracy of sending the RVs.

It should be noted that the above embodiment of receiving the repetition indication identifier and the above embodiment of not receiving the repetition indication identifier are two independent embodiments. The two embodiments may be implemented independently or may be implemented together, which are not limited in the embodiment of the present disclosure.

As a possible implementation, the received repetition indication identifier, sent by the base station to the UE, may be obtained based on a trigger message of MAC. In some embodiments, when the trigger message is received, that is, the repetition indication identifier is received, it is considered to indicate that at the current moment, an RV sent at the previous moment is not repeatedly sent, but is sequentially switched to the next RV. In another embodiments, when the trigger message is not received, that is, the repetition indication identifier is not received, it indicates that an RV sent at the previous moment is repeatedly sent at the current moment. In another embodiments, when a preset message is received, it is determined that the RV sent at the previous moment is not repeatedly sent at the current moment, but is sequentially switched to the next RV. In another embodiments, when the preset message is not received, it is determined that an RV sent at the previous moment is repeatedly sent. According to the solution, it is achieved that whether the RV is repeatedly sent may be determined based on an indication of the base station, and a number of repetitions of the RVs may be determined, thus improving the flexibility and accuracy of sending the RVs.

It needs to be understood that it is determined based on a decoding performance of a PUSCH and/or a channel quality whether the repetition indication message sent by the base station indicates an RV sent at the previous moment is repeatedly sent or is sequentially switched to the next RV.

In embodiments of the present disclosure, before the UE acquires the repetition indication message sent by the base station, the base station may detect a PUSCH channel quality of the UE, and the PUSCH channel quality of the UE is evaluated by a signal noise ratio (SNR), a channel quality indication (CQI) or a modulation and coding scheme (MCS).

As a first possible implementation, the base station may detect the PUSCH channel quality of the UE, determines an SNR of the PUSCH based on the detection result, and determines the PUSCH channel quality based on the value of SNR. When it is determined that the PUSCH channel quality is greater than or equal to a preset threshold, a first repetition indication message is sent for indicating the UE to switch to the next RV, to obtain more redundancy information. When it is determined that the PUSCH channel quality is less than the preset threshold, a second repetition indication message is sent for indicating UE to repeatedly send the current RV.

As a second possible implementation, the base station determines whether decoding is successful based on the obtained uplink transmission of the PUSCH sent by the UE, determines an SNR of the PUSCH based on the detection result, and determines the PUSCH channel quality based on the value of the SNR. As an example, when decoding fails, and it is determined that the PUSCH channel quality is greater than or equal to a preset threshold, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a third possible implementation, the base station acquires a block error rate (BLER) transmission based on the obtained uplink transmission of the PUSCH sent by the UE, determines a decoding performance based on the BLER, and determines an SNR of the PUSCH based on the detection result. As an example, when it is determined that the PUSCH channel quality is greater than or equal to a preset threshold based on a value of the SNR, and the decoding capability is poor, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a fourth possible implementation, the base station determines whether decoding is successful based on the obtained uplink transmission of the PUSCH sent by the UE, detects the PUSCH channel quality of the UE, and determines a CQI or MCS of the PUSCH based on the detection result, so that the PUSCH channel quality is determined based on a value of the CQI or MCS. As an example, when decoding fails and it is determined that the PUSCH channel quality is greater than or equal to a preset threshold, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a fifth possible implementation, the base station acquires a BLER transmission based on the obtained uplink transmission of the PUSCH sent by the UE, determines a decoding performance based on the BLER, and determines a CQI or MCS of the PUSCH based on the detection result. As an example, when it is determined that the PUSCH channel quality is greater than or equal to a preset threshold based on the value of the CQI or MCS, and the decoding capability is poor, a first repetition indication message is sent for indicating the UE to switch to the next RV, to obtain more redundancy information. When it is determined that the PUSCH channel quality is less than the preset threshold, a second repetition indication message is sent for indicating UE to repeatedly send the current RV.

It needs to be noted that, in order to facilitate description, the repetition indication message is divided into the first repetition indication message and the second repetition indication message in order to identify the RV that currently needs to be sent, where the RV may be an RV sent at the previous moment to be repeatedly sent, or a next RV to which it is switched. The explanation and description of the repetition indication message are also applicable to the first repetition indication message and the second repetition indication message, which may not be repeated.

It needs to be noted that, when the base station determines that decoding has been successful, the base station indicates that the UE does not need to send the RV, that is, stops sending the RV, to avoid repetition transmission and a waste of channel resources.

According to the method for uplink coverage enhancement in the embodiments of the present disclosure, the UE determines the initial RV that needs to be sent to the base station based on the obtained indication message of the initial RV sent by the base station, so that sending may be started from the initial RV of the RV sequence during new transmission, and an RV that needs to be sent is determined based on a number of transmission repetitions, to increase the amount of obtained redundant information and improve a success rate of decoding. Further, after the initial RV sent by the UE is determined, when decoding fails, the base station sends the repetition instruction message to indicate that the UE switches to the next RV based on the PUSCH channel quality measured by the base station, if the channel quality is good, to increase the amount of obtained redundancy information and improve a success rate of subsequent decoding by the base station. If the channel quality is poor, the repetition instruction message is sent to indicate that the UE continues repeatedly sending the RV sent last time, to ensure that the base station obtains the RV through repeated transmission, thus improving a success rate of decoding by the base station. Meanwhile, an RV repetition is flexibly determined, and a dynamical RV repetition solution is determined, which improves a coverage performance of the base station. The repetition indication information may be sent by DCI or MAC, and may be indicated by occupying one bit, thus reducing the overhead of the base station sending the repetition indication message, and improving the overall performance.

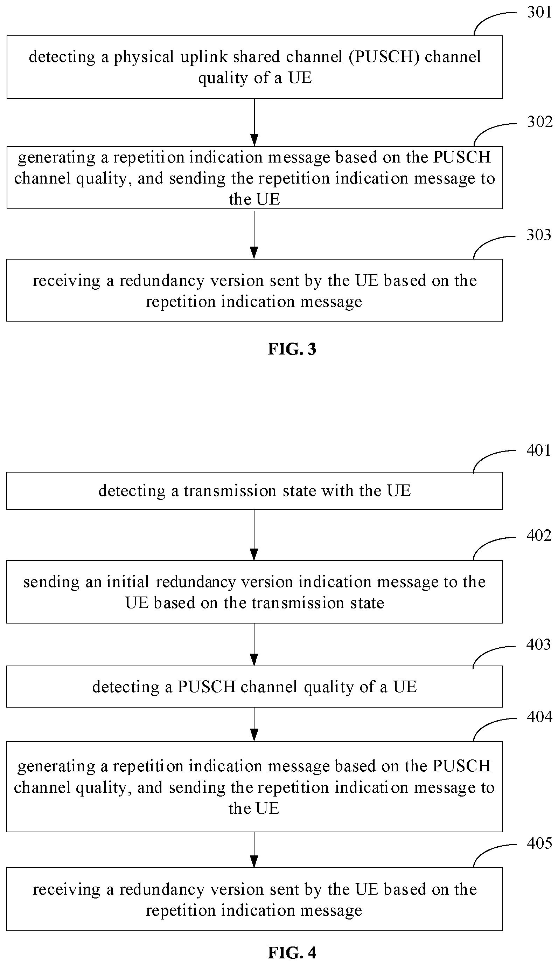

FIG. 3 is a flowchart illustrating another method for uplink coverage enhancement in an embodiment of the present disclosure, which is applied to a base station.

As illustrated in FIG. 3, the method may include the following steps.

At step 301, a physical uplink shared channel (PUSCH) channel quality of a user equipment (UE) is detected.

The method for uplink coverage enhancement in the embodiments of the present disclosure is applicable to any base station. The base station may include a plurality of cells that provide services for the UE. According to different specific application occasions, the base station may also be referred to as an access point, or may be a device in an access network that communicates with a wireless user equipment through one or more sectors on an air interface, or other names. The base station may be configured to interchange a received air frame and an Internet Protocol (IP) packet, as a router between a wireless UE and the rest part of an access network. The rest part of the access network may include an Internet Protocol (IP) communication network. The base station may further coordinate attribute management of the air interface. For example, the base station involved in the embodiments of the present disclosure may be a base transceiver station (BTS) in a global system for mobile communications (GSM) or a BTS in code division multiple access (CDMA)), or may be a NodeB in wide-band code division multiple access (WCDMA), or may be an evolutional Node B (eNB or e-NodeB) in a long term evolution (LTE) system, or may be a 5G base station (gNB) in a next generation system, or may be a home evolved Node B (HeNB), a relay node, a femto, and a pico, which is not limited in the embodiments of the present disclosure. In some network structures, the base station may include a centralized unit (CU) node and a distributed unit (DU) node that may also be geographically separated for arrangement.

The UE may refer to a device that provides voice connectivity and/or data connectivity for a user. The UE may communicate with one or more core networks through a radio access network (RAN). The UE may be an internet of things user equipment, for example, a sensor device, a mobile phone (or referred to as a cellular phone) and a computer having an internet of things user equipment. For example, the UE may be a fixed, portable, compact, handheld, computer built-in or vehicle-mounted device. For example, the UE may be a station (STA), a subscriber unit, a subscriber station, a mobile station, a mobile, a remote station, an access point, a remote terminal, an access terminal, a user terminal, a user agent, a user device or a user equipment (UE). Alternatively, the UE may be a device of an unmanned vehicle. Alternatively, the UE may also be a vehicle-mounted device, for example, a vehicle-mounted computer with a wireless communication function, or a wireless user equipment externally connected to a vehicle-mounted computer. Alternatively, the UE may also be a roadside device, for example, a street lamp, a signal lamp or other roadside device with a wireless communication function.

In the embodiments of the present disclosure, the base station may detect a PUSCH channel quality of the UE, and the PUSCH channel quality of the UE is reflected by a signal noise ratio (SNR), a channel quality indication (CQI) or a modulation and coding scheme (MCS).

It needs to be noted that, in an implementation of the embodiment, the PUSCH channel quality may be determined based on any two or more combinations of the SNR, CQI and MCS, to improve the reliability of determining a channel quality.

At step 302, a repetition indication message is generated based on the PUSCH channel quality, and the repetition indication message is sent to the UE.

The repetition indication message is determined by the base station based on the PUSCH channel quality, and/or whether decoding is successful based on the transmission obtained from the PUSCH. The repetition indication message indicates an RV that currently needs to be sent. The RV refers to transmission of a version number corresponding to the RV. In the embodiment, on the basis of the existing fixed RV repetition solution, a dynamic RV repetition solution is determined by the base station based on the measured channel quality , and/or a success situation of decoding , and the dynamic RV repetition solution is sent to a UE via the repetition indication message, so that the UE not only may obtain enough redundancy information to achieve the uplink enhancement coverage but also improve the efficiency, based on the RV repetition solution included in the obtained repetition indication message.

As a first possible implementation, the base station may detect the PUSCH channel quality of the UE, and determines an SNR of the PUSCH based on the detection result, so as to determine the PUSCH channel quality based on the value of the SNR. In an example, when it is determined that the PUSCH channel quality is greater than or equal to a preset threshold, a first repetition indication message is sent for indicating the UE to switch to the next RV, to obtain more redundancy information. In another example, when it is determined that the PUSCH channel quality is less than the preset threshold, a second repetition indication message is sent for indicating UE to repeatedly send the current RV.

As a second possible implementation, the base station determines whether decoding is successful based on the obtained uplink transmission of the PUSCH sent by the UE, determines an SNR of the PUSCH based on the detection result, and determines the PUSCH channel quality based on the value of the SNR. As an example, when decoding fails, and it is determined that the PUSCH channel quality is greater than or equal to a preset threshold, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a third possible implementation, the base station acquires a block error rate (BLER) transmission based on the obtained uplink transmission of the PUSCH sent by the UE, determines a decoding performance based on the BLER, and determines an SNR of the PUSCH based on the detection result. As an example, when it is determined that the PUSCH channel quality is greater than or equal to a preset threshold based on a value of the SNR, and the decoding capability is poor, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a fourth possible implementation, the base station determines whether decoding is successful based on the obtained uplink transmission of the PUSCH sent by the UE, detects the PUSCH channel quality of the UE, and determines a CQI or MCS of the PUSCH based on the detection result, so that the PUSCH channel quality is determined based on a value of the CQI or MCS. As an example, when decoding fails and it is determined that the PUSCH channel quality is greater than or equal to a preset threshold, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a fifth possible implementation, the base station acquires a BLER transmission based on the obtained uplink transmission of the PUSCH sent by the UE, determines a decoding performance based on the BLER, and determines a CQI or MCS of the PUSCH based on the detection result. As an example, when it is determined that the PUSCH channel quality is greater than or equal to a preset threshold based on the value of the CQI or MCS, and the decoding capability is poor, a first repetition indication message is sent for indicating the UE to switch to the next RV, to obtain more redundancy information. When it is determined that the PUSCH channel quality is less than the preset threshold, a second repetition indication message is sent for indicating UE to repeatedly send the current RV.

As a possible implementation, the repetition indication message may be sent by the base station via downlink control information (DCI) or implicitly sent to the UE. The DCI is carried in a physical downlink control channel (PDCCH).

As another possible implementation, the repetition indication message may be sent by the base station via a medium access control (MAC) signaling to the UE.

It needs to be noted that, in order to facilitate description, the repetition indication message is divided into the first repetition indication message and the second repetition indication message in order to identify the RV that currently needs to be sent, where the RV may be an RV sent at the previous moment to be repeatedly sent, or a next RV to which it is switched.

It needs to be noted that, when the base station determines that decoding has been successful, the base station indicates that the UE does not need to send the RV, that is, stops sending the RV, to avoid repetition transmission and a waste of channel resources.

At step 303, a redundancy version sent by the UE is received based on the repetition indication message.

In all embodiments of the present disclosure, the RV refers to transmission of a version number corresponding to the RV.

In an NR communication service, in order to improve the reliability of ultra-reliable and low latency communication (URLLC), the base station acquires an uplink transmission sent by the UE via a PUSCH, which may be repeated for a plurality of times to improve the reliability. The base station may determine a corresponding RV from the received uplink transmission sent by the UE via an uplink channel (PUSCH). The RV is determined by the UE based on the repetition indication message sent by the base station. The order of RVs obtained by the base station is sent by the UE based on a preset RV sequence. A plurality of RVs are included in the preset RV sequence, and are arranged in the preset RV sequence based on the preset order, that is, the RV obtained by the base station is one version in the preset RV sequence.

As a possible implementation, the plurality of RVs included in the preset RV sequence include 1^{st} to N^{th} RV version numbers, and the 1^{st} to N^{th} RV version numbers are arranged in a preset order, where N is a positive integer, for example, N is 4 or 6, which is not limited in the embodiment.

For ease of description, the embodiment, is illustrated by taking the number of RVs included in the preset RV sequence being 4 for an example, and when the version N is another number value, the principle is the same, which is not repeated in the embodiment.

As an implementation, when the number N of RVs is 4, the preset RV sequence is [0, 2, 3, 1], where 0, 2, 3 and 1 respectively correspond to different RV version numbers, and when the UE sends an RV sequence to the base station, the UE may send the RVs arranged in the preset order. It needs to be noted that, the RV sequence [0, 2, 3, 1] has a good decoding performance but a poor self-decoding capability.

As another implementation, when the number N of RVs is 4, the preset RV sequence is [0, 3, 0, 3], where 0 and 3 respectively correspond to different RV version numbers, and when the UE sends an RV sequence to the base station, the UE may send the RVs arranged in the preset order.

It needs to be noted that, an RV sequence decoding performance and a self-decoding performance of [0, 3, 0, 3] are relatively balanced, and decoding performances of different RV sequences may be determined in a simulation experiment, or may be determined based on historical records in practical applications, which are not limited in the embodiment.

In some embodiments, an RV repeatedly sent is included in an RV sequence sent by the UE obtained by the base station. The effect of a receiver tracking a frequency may be improved, or the accuracy of channel estimation may be improved. That is, there is repetition transmission of RVs in an RV sequence actually received by the base station, which is referred to as an RV repetition sequence. However, a number of repetitions of each version in the RV repetition sequence is same, and not dynamically changed. For example, for 16 repetitions included in the RV repetition sequence, the RV repetition sequence is {0, 0, 0, 0, 2, 2, 2, 2, 3, 3, 3, 3, 1, 1, 1, 1}. However, in the disclosure, the RVs in the RV repetition sequence sent by the UE to the base station are determined based on the repetition indication message sent by the base station. That is, one or more RVs in a transmission process are dynamically changed. A number of repetitions of the one or more RVs is also determined by the repetition indication message obtained from the base station, that is, the number of repetitions of each RV in the RV repetition sequence may be same or different. The number of repetitions of each RV in the RV repetition sequence may be preset, or may be dynamically configured by the base station. For example, the RV0 is transmitted for 5 repetitions, the RV2 is transmitted for 3 repetitions, the RV3 is transmitted for 2 repetitions, and the RV1 is transmitted for 6 repetitions, so that the RV repetition sequence is represented by {0, 0, 0, 0, 0, 2, 2, 2, 3, 3, 1, 1, 1, 1, 1, 1}.

In the embodiment, the base station acquires an RV corresponding to a repetition indication message sent by the UE via a PUSCH. The corresponding RV is sent by the UE based on each sending moment. For example, when the RV obtained by the base station at a previous sending moment is 3, the RV repetition sequence obtained by the base station at the previous sending moment is: 0, 0, 0, 2, 3, 3, when the RV version number sent by the UE obtained the base station at a current sending moment is 1, the RV repetition sequence sent by the UE obtained by the base station at the current sending moment is: 0, 0, 0, 2, 3, 3, 1, so that a dynamically changing RV sequence is set based on the repetition indication message sent by the base station. Since the repetition indication message sent by the base station is determined based on a success situation of decoding and/or a channel quality, the accuracy of sending the RVs and determining a number of repetitions of the RVs is improved, and the enhancement coverage of the base station is improved.

According to the method for uplink coverage enhancement in the embodiments of the present disclosure, the PUSCH channel quality of UE is detected, the repetition indication message is generated based on the PUSCH channel quality, and sent to the UE. The RV sent by the UE based on the repetition indication message is received. The corresponding repetition indication message is generated based on the PUSCH channel quality measured by the base station, so that the UE determines whether to repeatedly send the RV sent last time or switch to the next RV based on the RV indicated in the repetition indication message. In this way, it is achieved that the RV repetition solution is flexibly determined, and the coverage performance of the base station is improved.

In an embodiment, the base station may determine initial RV information that needs to be sent by the UE first when obtaining the RV sent by the base station, and further determine a repetition indication message based on the measured channel quality , so that the UE determines whether the RV is repeatedly sent or the RV is switched to the next RV for sending based on the repetition indication message, to improve the reliability of repeatedly sending the RV. For this purpose, another method for uplink coverage enhancement is provided in the embodiments of the present disclosure. It is illustrated how to determine an initial RV and an RV repetition situation, which reduces an overhead of the base station.

As illustrated in FIG. 4, the method may include the following steps.

At step 401, a transmission state with the UE is detected.

The transmission state includes a new transmission state and a repetition transmission state. If a terminal sends a new packet to the base station, it indicates a new transmission state, and if the packet fails to be received or decoded, the packet may be transmitted for a plurality of repetitions, that is, a repetition transmission state is entered. A number of transmission repetitions has a corresponding relationship with an RV in the adopted preset RV sequence.

At step 402, an initial RV indication message is sent to the UE based on the transmission state.

The initial RV indication message indicates an RV initially sent by the UE to the base station based on a preset RV sequence. That is, the initial RV indication message indicates from which RV the UE starts sending to the base station based on the RV sequence. The RV refers to transmission of a version number corresponding to the RV.

It should be noted that, in an embodiment of the present disclosure, the initial RV indication message is determined by the base station based on a detected transmission state of the UE. The transmission state may be divided into a new transmission station and a repetition transmission state, and the initial RV indication message has a corresponding relationship with the transmission state. Therefore, in order to facilitate distinguishing, when the transmission state is a new transmission state, a first initial RV indication message may be sent to the UE. The first initial RV indication message is configured to indicate the UE to send the RV0 at a first sending moment. When the connection state is a repetition transmission state, a non-first initial RV indication message may be sent to the UE based on a number of transmission repetitions.

In the embodiment, if the terminal sends a new packet to the base station, it indicates a new transmission state, and if the packet fails to be received or decoded, the packet may be transmitted for a plurality of repetitions, that is, a repetition transmission state is entered. A number of transmission repetitions has a corresponding relationship with an RV in the adopted preset RV sequence. In order to facilitate distinguishing, in the embodiment, an initial RV indication message corresponding to the new transmission state between the base station and the UE is referred to as a first initial RV indication message. When a number of transmission repetitions is one (that is, a second repetition transmission), a corresponding initial RV indication message is referred to as a second initial RV indication message. When a number of transmission repetitions is two (that is, a third repetition transmission), an initial RV indication message corresponding to the third repetition transmission is referred to as a third initial RV indication message, and so forth, which are not listed in the embodiment. RVs indicated by different initial RV indication messages may be same or different. As a possible implementation, the above initial RV indication message may be sent by the base station via DCI sent to the UE. The DCI is carried in a PDCCH. The base station sends the initial RV indication message via 2 bits reserved in the DCI.

For example, if the preset RV sequence is [0, 2, 3, 1], there are 4 initial RV indication messages. For example, when the UE receives DCI00 sent by the base station via the DCI, DCI00 corresponds to a first initial indication message, when the UE receives DCI01 sent by the base station via the DCI, DCI01 corresponds to a second initial indication message, when the UE receives DCI10 sent by the base station via the DCI, DCI10 corresponds to a third initial indication message, and when the UE receives DCI11 sent by the base station via the DCI, DCI11 corresponds to a fourth initial indication message.

It should be noted that, when the number of RVs included in the preset RV sequence is another number value, the principle is the same as that when the RV version number is 4, which is not repeated in the embodiment.

In an embodiment of the present disclosure, the preset RV sequence is [0, 2, 3, 1]. For example, when a connection between the base station and the UE is the new transmission state, the initial RV indication message determines the initial RV as the RV0, and the initial RV sent by the UE to the base station at the first sending moment is the RV0. When the new transmission between the UE and the base station fails, a first repetition transmission is performed, that is, a number of transmission repetitions is one, the initial RV indication message determines the initial RV as the RV2, and the initial RV sent by the UE to the base station is the RV2. When a second repetition transmission is performed between the UE and the base station, that is, a number of transmission repetitions is two, the initial RV indication information determines the initial RV as the RV3, and the initial RV sent by the UE to the base station is the RV3. When a third repetition transmission is performed between the UE and the base station, that is, a number of transmission repetitions is three, the initial RV indication information determines the initial RV as the RV1, and the initial RV sent by the UE to the base station is the RV1.

It should be noted that, when the preset RV sequence is [0, 3, 0, 3], its principle of determining an initial RV is same as that when the above preset RV sequence is [0, 2, 3, 1], which is not repeated in the embodiment.

At step 403, a PUSCH channel quality of a UE is detected.

The method for uplink coverage enhancement in the embodiments of the present disclosure is applicable to any base station. The base station may include a plurality of cells that provide services for the UE. According to different specific application occasions, the base station may also be referred to as an access point, or may be a device in an access network that communicates with a wireless user equipment through one or more sectors on an air interface, or other names. The base station may be configured to interchange a received air frame and an Internet Protocol (IP) packet, as a router between a wireless UE and the rest part of an access network. The rest part of the access network may include an Internet Protocol (IP) communication network. The base station may further coordinate attribute management of the air interface. For example, the base station involved in the embodiments of the present disclosure may be a base transceiver station (BTS) in a global system for mobile communications (GSM) or a BTS in code division multiple access (CDMA)), or may be a NodeB in wide-band code division multiple access (WCDMA), or may be an evolutional Node B (eNB or e-NodeB) in a long term evolution (LTE) system, or may be a 5G base station (gNB) in a next generation system, or may be a home evolved Node B (HeNB), a relay node, a femto, and a pico, which is not limited in the embodiments of the present disclosure. In some network structures, the base station may include a centralized unit (CU) node and a distributed unit (DU) node that may also be geographically separated for arrangement.

The UE may refer to a device that provides voice connectivity and/or data connectivity for a user.

In the embodiments of the present disclosure, after the base station sends an initial version indication message to the UE, the base station may detect a PUSCH channel quality of the UE, in order to determine a repetition indication message to be sent which indicates a corresponding RV sent by the terminal, that is, indicates whether the RV sent last time is repeatedly sent or switched to the next RV based on the preset order, . The PUSCH channel quality of the UE is reflected by a signal noise ratio (SNR), a channel quality indication (CQI) or a modulation and coding scheme (MCS).

It needs to be noted that, in an implementation of the embodiment, the PUSCH channel quality may be determined based on any two or more combinations of the SNR, CQI and MCS, to improve the reliability of determining the channel quality.

At step 404, a repetition indication message is generated based on the PUSCH channel quality, and the repetition indication message is sent to the UE.

The repetition indication message is determined by the base station based on the PUSCH channel quality, and/or whether decoding is successful based on the transmission obtained from the PUSCH. The repetition indication message indicates an RV that currently needs to be sent by the UE. In all embodiments of the present disclosure, the RV refers to transmission of a version number corresponding to the RV.

As a first possible implementation, the base station may detect the PUSCH channel quality of the UE, and determines an SNR of the PUSCH based on the detection result, so as to determine the PUSCH channel quality based on the value of the SNR. In an example, when it is determined that the PUSCH channel quality is greater than or equal to a preset threshold, a first repetition indication message is sent for indicating the UE to switch to the next RV, to obtain more redundancy information. In another example, when it is determined that the PUSCH channel quality is less than the preset threshold, a second repetition indication message is sent for indicating UE to repeatedly send the current RV.

As a second possible implementation, the base station determines whether decoding is successful based on the obtained uplink transmission of the PUSCH sent by the UE, determines an SNR of the PUSCH based on the detection result, and determines the PUSCH channel quality based on the value of the SNR. As an example, when decoding fails, and it is determined that the PUSCH channel quality is greater than or equal to a preset threshold, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a third possible implementation, the base station obtains a block error rate (BLER) transmission based on the obtained uplink transmission of the PUSCH sent by the UE, determines a decoding performance based on the BLER, and determines an SNR of the PUSCH based on the detection result. As an example, when it is determined that the PUSCH channel quality is greater than or equal to a preset threshold based on a value of the SNR, and the decoding capability is poor, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a fourth possible implementation, the base station determines whether decoding is successful based on the obtained uplink transmission of the PUSCH sent by the UE, detects the PUSCH channel quality of the UE, and determines a CQI or MCS of the PUSCH based on the detection result, so that the PUSCH channel quality is determined based on a value of the CQI or MCS. As an example, when decoding fails, and it is determined that the channel quality is greater than or equal to a preset threshold, a first repetition indication message is sent for indicating the UE to switch to the next RV, to obtain more redundancy information. As another example, when it is determined that the PUSCH channel quality is less than the preset threshold, a second repetition indication message is sent for indicating UE to repeatedly send the current RV.

As a fifth possible implementation, the base station obtains a BLER transmission based on the obtained uplink transmission of the PUSCH sent by the UE, determines a decoding performance based on the BLER, and determines a CQI or MCS of the PUSCH based on the detection result. As an example, when it is determined that the PUSCH channel quality is greater than or equal to a preset threshold based on the value of the CQI or MCS, and the decoding capability is poor, a first repetition indication message is sent for indicating the UE to switch to the next RV, to obtain more redundancy information. When it is determined that the PUSCH channel quality is less than the preset threshold, a second repetition indication message is sent for indicating UE to repeatedly send a current RV.

In the embodiment, on the basis of the existing fixed RV repetition solution, a dynamic RV version repetition solution is determined by the base station based on the measured channel quality, and/or a success situation of decoding, and the dynamic RV repetition solution is sent in the repetition indication message to the UE, so that the UE not only may obtain enough redundancy information to achieve the enhancement coverage but also improve the transmission efficiency and reliability, based on the obtained RV repetition solution included in the repetition indication message.

As a possible implementation, the repetition indication message may be explicitly or implicitly sent via downlink control information (DCI) by the base station to the UE. The DCI is carried in a physical downlink control channel (PDCCH).

As another possible implementation, the repetition indication message may be sent by the base station via a medium access control (MAC) signaling to the UE.

It needs to be noted that, in order to facilitate description, the repetition indication message is divided into a first repetition indication message and a second repetition indication message. In order to identify the RV that currently needs to be sent, the RV may be an RV sent at the previous moment to be repeatedly sent, or a next RV to which it is switched.

It needs to be understood that, when the base station determines that decoding has been successful, the base station indicates that the UE does not need to send the RV, that is, stops sending the RV, to avoid repetition transmission and a waste of channel resources.

In an embodiment of the present disclosure, a repetition indication message is sent via 2 bits in the DCI. For example, when the repetition indication message indicates an RV with an RV version number of 3, the value of 2 bits in the DCI is 11. Then, when the base station sends a repetition indication message each time, signaling of 2 bits is consumed. For example, when the base station sends the repetition indication message for 16 times, that is, a number of repetitions of the RVs is 16, and the overhead of the base station is 16 * 2 = 32 bits. In this case, the overhead of the base station is large, which affects an overall performance of the base station.

Therefore, in another possible implementation of the embodiments of the present disclosure, in order to reduce the signaling overhead of the base station, the base station may indicate an RV corresponding to a current moment by setting a repetition indication identifier. The repetition indication identifier indicates whether an RV to be sent is an RV corresponding to a previous moment to be repeatedly sent, or a next RV to which it is switched. The repetition indication identifier may be achieved by one bit. For example, the identifier is 1, which indicates that the RV sent at the previous moment is not repeatedly sent, but sequentially switched to the next RV; the identifier is 0, which indicates that the RV at the previous moment is repeatedly sent. For example, if the base station sends the repetition indication message for 16 times, that is, a number of repetitions of the RVs is 16, and the overhead of the base station is 1 * 16 = 16 bits, which reduces the signaling overhead of the base station and improves the overall performance of the base station.

In the embodiment, as a possible implementation, the repetition indication identifier obtained by the UE may be included in the obtained repetition indication message, that is, the repetition indication message includes the repetition indication identifier. As another possible implementation, the repetition indication identifier may be sent when DCI is triggered or MAC is triggered.

The following is specifically described by means of different implementations.

In a possible implementation of embodiments of the present disclosure, the repetition indication message includes the repetition indication identifier. The UE obtains an i^{th} RV sent at a previous sending moment, where i is a positive integer less than or equal to N; when the repetition indication identifier indicates repeating, the i^{th} RV is repeatedly sent at the current sending moment; and when the repetition indication identifier indicates stopping repeating, an (i +1)^{th} RV is determined based on a preset order, and the (i +1)^{th} RV is sent at the current sending moment.

As a possible implementation, the repetition indication identifier may be indicated by one preset bit in the DCI to indicate whether the UE repeatedly sends the RV sent at the previous moment. For example, the repetition indication message is sent by two bits A and B preset in the DCI, and the repetition indication identifier may be indicated by one bit D in the DCI, which reduces the signaling consumption of the base station by one bit. For example, the bit D is identified as a first value (for example, 1 or 0), which indicates that the RV sent at the previous moment is not repeatedly sent, but sequentially switched to the next RV; the bit D identifier is identified as a second value (for example, 0 or 1, different from the first value), which indicates that the RV sent at the previous moment is repeatedly sent, so that whether the RV is repeatedly sent may be determined based on an indication of the base station, and a number of repetitions of the RV may be determined, which improves the flexibility and accuracy of sending the RVs.

As a possible implementation, the repetition indication identifier may be indicated by one preset bit in the DCI to indicate whether the UE repeatedly sends the RV sent at the previous moment. For example, the repetition indication message is sent by two preset bits A and B in the DCI, and the repetition indication identifier may be indicated by one bit A in the adopted DCI, which reduces the signaling consumption of the base station by one bit.

It should be noted that, one bit for indicating a repetition indication identifier in the DCI is different from the bit for indicating an initial RV indication message in the DCI.

In another possible implementation of embodiments of the present disclosure, the repetition indication identifier may be carried in a new signaling sent when the DCI is triggered or the MAC is triggered. The new signaling is a repetition indication message, and the i^{th} RV sent at the previous sending moment is obtained, where i is a positive integer less than or equal to N. In some embodiments, it is determined whether the repetition indication identifier is received at the current sending moment. In response to receiving the repetition indication identifier, the (i +1)^{th} RV is determined based on the preset order, and the (i +1)^{th} RV is sent at the current sending moment. In another embodiments, in response to not receiving the repetition indication identifier, the ith RV is repeatedly sent at the current sending moment. According to the solution, whether the RV is repeatedly sent may be determined based on an indication of the base station, and a number of repetitions of the RVs may be determined, thus improving the flexibility and accuracy of sending the RV. It should be noted that the above embodiment of receiving the repetition indication identifier and the above embodiment of not receiving the repetition indication identifier are two independent embodiments. The two embodiments may be implemented independently or may be implemented together, which are not limited in the embodiment of the present disclosure.

The repetition indication identifier received by the UE may be indicated based on a DCI trigger message or indicated based on a MAC trigger message, which are illustrated by different implementations.

As a possible implementation, the received repetition indication identifier, sent by the base station to the UE, may be obtained based on a trigger message of DCI. In some embodiments, when the trigger message is received, that is, the repetition indication identifier is received, it is considered to indicate that at the current moment, an RV sent at the previous moment is not repeatedly sent, but is sequentially switched to the next RV. In another embodiments, when the trigger message is not received, that is, the repetition indication identifier is not received, it indicates that the RV sent at the previous moment is repeatedly sent at the current moment. According to the solution, whether the RV is repeatedly sent may be determined based on an indication of the base station, and a number of repetitions of the RVs may be determined, thus improving the flexibility and accuracy of sending the RVs. It should be noted that the above embodiment of receiving the repetition indication identifier and the above embodiment of not receiving the repetition indication identifier are two independent embodiments. The two embodiments may be implemented independently or may be implemented together, which are not limited in the embodiment of the present disclosure.

As a possible implementation, the received repetition indication identifier, sent by the base station to the UE, may be obtained based on a trigger message of MAC. In some embodiments, when the trigger message is received, that is, the repetition indication identifier is received, it is considered to indicate that at the current moment, the RV sent at the previous moment is not repeatedly sent, but is sequentially switched to the next RV. In another embodiments, when the repetition indication identifier is not received, it indicates that the RV sent at the previous moment is repeatedly sent at the current moment. In another embodiments, when a preset message is received, it is determined that the RV sent at the previous moment is not repeatedly sent at the current moment, but is sequentially switched to the next RV. In another embodiments, when the preset message is not received, it is determined that the RV sent at the previous moment is repeatedly sent. According to the solution, it is achieved that whether the RV is repeatedly sent may be determined based on an indication of the base station, and a number of repetitions of the RVs may be determined, thus improving the flexibility and accuracy of sending the RVs.

At step 405, a redundancy version (RV) sent by the UE based on the repetition indication message is determined.

In an NR communication service, in order to improve the reliability of ultra-reliable and low latency communication (URLLC), the base station obtains an uplink transmission sent by the UE via a PUSCH, which may be repeated for a plurality of times to improve the reliability. The base station may determine a corresponding RV from the received uplink transmission sent by the UE via an uplink channel (PUSCH). The RV is determined by the UE based on the repetition indication message sent by the base station. The order of RVs obtained by the base station is sent by the UE based on a preset RV sequence. A plurality of RVs are included in the preset RV sequence, and are arranged in the preset RV sequence based on the preset order, that is, the RV sent by the UE and obtained by the base station is one version in the preset RV sequence.

As a possible implementation, the plurality of RVs included in the preset RV sequence include 1^{st} to N^{th} RV version numbers, and the 1^{st} to N^{th} RV version numbers are arranged in a preset order, where N is a positive integer, for example, N is 4 or 6, which is not limited in the embodiment.

For ease of description, the embodiment is illustrated by taking the number of RVs included in the preset RV sequence being 4 for an example, and when the version N is another number value, the principle is the same, which is not repeated in the embodiment.

As an implementation, when the number N of RVs is 4, the preset RV sequence is [0, 2, 3, 1], where 0, 2, 3 and 1 respectively correspond to different RV version numbers, and when the UE sends an RV sequence to the base station, the UE may send the RVs arranged in the preset order. Those skilled in the art may understand that the preset order is merely illustrative, and is not limited to the protection scope of the present disclosure. In some environments, the RV sequence [0, 2, 3, 1] has a good decoding performance but a poor self-decoding capacity.

As another implementation, when the number N of RVs is 4, the preset RV sequence is [0, 3, 0, 3], where 0 and 3 respectively correspond to different RV version numbers, and when the UE sends an RV sequence to the base station, the UE may send the RVs arranged in the preset order. It needs to be noted that, an RV sequence decoding performance and a self-decoding performance of [0, 3, 0, 3] are relatively balanced, and decoding performances of different RV sequences may be determined in a simulation experiment, or may be determined based on historical records in practical applications, which are not limited in the embodiment.

In an implementation, an RV repeatedly sent is included in an RV sequence sent by the UE obtained by the base station. The effect of a receiver tracking a frequency may be improved, or the accuracy of channel estimation may be improved based on the RV repeatedly sent, that is, there is repetition transmission of RVs in an RV sequence actually received by the base station, which is referred to as an RV repetition sequence. However, a number of repetitions of each version in the RV repetition sequence is same, and not dynamically changed. For example, for 16 repetitions included in the RV repetition sequence, the RV repetition sequence is {0, 0, 0, 0, 2, 2, 2, 2, 3, 3, 3, 3, 1, 1, 1, 1}. However, in the disclosure, the RVs in the RV repetition sequence sent by the UE to the base station are determined based on the repetition indication message sent by the base station. That is, one or more RVs in a transmission process are dynamically changed and are not preset fixed RVs. In some embodiments, a number of repetitions of the one or more RVs is also determined by the repetition indication message obtained from the base station. That is, the number of repetitions of each RV in the RV repetition sequence may be same or different. The number of repetitions of each RV in the RV repetition sequence may be preset, or may be dynamically configured by the base station. For example, a number of repetitions of the RV0 is 5, a number of repetitions of the RV2 is 3, a number of repetitions of the RV3 is 2, and a number of repetitions of the RV1 is 6, so that the RV repetition sequence is represented by {0, 0, 0, 0, 0, 2, 2, 2, 3, 3, 1, 1, 1, 1, 1, 1}.

In the embodiment, the base station obtains an RV corresponding to a repetition indication message sent by the UE via a PUSCH. The corresponding RV is sent by the UE based on each sending moment. For example, when the RV version number obtained by the base station at a previous sending moment is 3, the RV repetition sequence obtained by the corresponding base station at the previous sending moment is: 0, 0, 0, 2, 3, 3, when an RV version number sent by the UE obtained by the base station at a current sending moment is 1, the RV repetition sequence sent by the UE obtained by the base station at the current sending moment is: 0, 0, 0, 2, 3, 3, 1, so that a dynamically changing RV sequence is set based on the repetition indication message sent by the base station. Since the repetition indication message sent by the base station is determined based on a success situation of decoding and/or a channel quality, the accuracy of sending the RVs and determining a number of repetitions of the RVs is improved, and the uplink enhancement coverage of the base station is improved.

According to the method for uplink coverage enhancement in the embodiments of the present disclosure, the UE determines an initial RV that needs to be sent to the base station based on the obtained indication message of the initial RV sent by the base station, so that sending may be started from the initial RV of the RV sequence when a new connection is established, and when the connection is disconnected and needs to be reconnected, an RV that needs to be sent is determined based on a number of connections, to increase the amount of obtained redundancy information and improve a success rate of decoding. Further, after the initial RV sent by the UE is determined, when decoding fails, the base station sends the repetition instruction message to indicate that the UE switches to the next RV based on the PUSCH channel quality measured by the base station, if the channel quality is good, to increase the amount of obtained redundancy information and improve a success rate of subsequent decoding by the base station. If the channel quality is poor, the repetition instruction message is sent to indicate that the UE continues repeatedly sending the RV sent last time, to ensure that the base station obtains the RV through repetition transmission, thus improving a success rate of decoding by the base station. Meanwhile, an RV repetition is flexibly determined, and a dynamical RV repetition solution is determined, which improves a coverage performance of the base station. The repetition indication information may be sent by DCI or MAC, and may be indicated by occupying one bit, thus reducing the overhead of the base station sending the repetition indication message, and improving the overall performance.

In order to achieve the above embodiments, an apparatus for uplink coverage enhancement is further provided in the present disclosure.

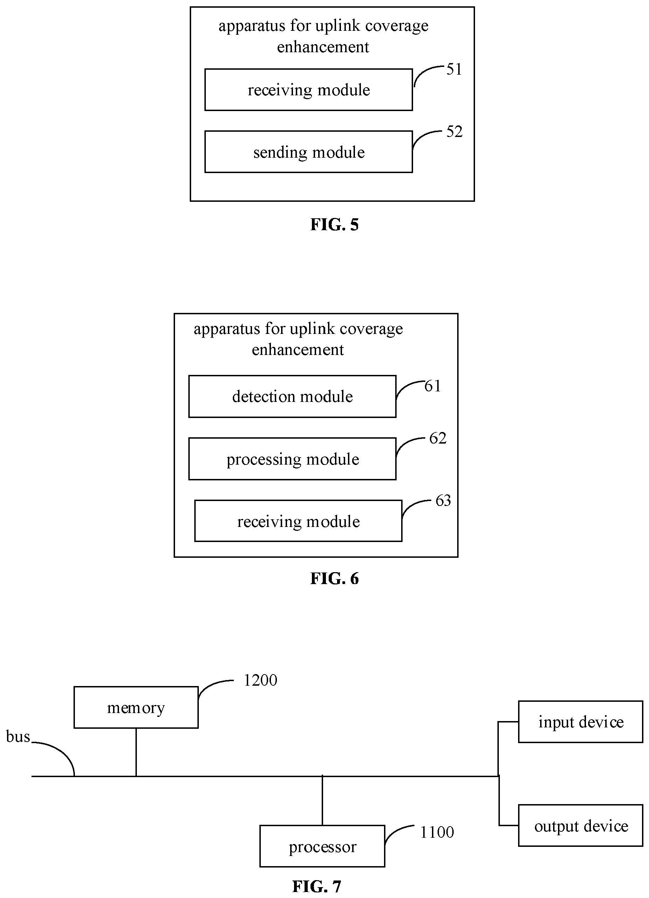

FIG. 5 is a diagram illustrating a structure of an apparatus for uplink coverage enhancement according to an embodiment of the present disclosure, which is applicable to a user equipment (UE).

As illustrated in FIG. 5, the apparatus includes a receiving module 51 and a sending module 52.

The receiving module 51 is configured to receive a repetition indication message related to repetition transmission sent by a base station.

The sending module 52 is configured to send a redundancy version (RV) corresponding to the repetition indication message to the base station via an uplink channel based on the repetition indication message related to the repetition transmission.

In actual application, the apparatus for coverage enhancement of the base station according to the embodiments of the present disclosure may be configured in any UE, to perform the method for uplink coverage enhancement.

The RV refers to transmission of a version number corresponding to the RV.

According to the apparatus for uplink coverage enhancement in the embodiment of the disclosure, the UE receives the repetition indication message sent by the base station, and sends the RV corresponding to the repetition indication message to the base station via the uplink shared channel. Thus, a dynamically changing RV sequence is set on the basis of the repetition indication message sent by the base station. Since the repetition indication message sent by the base station is determined based on a success situation of decoding and a channel quality, the accuracy of an RV repetition solution is improved, and the enhancement coverage of the base station is improved.

In a possible implementation of the embodiments of the present disclosure, the RV is sent to the base station in a preset RV sequence. The preset RV sequence includes a plurality of RV version numbers, and a number of repetitions of each of the plurality of RV version numbers is determined by the repetition indication message.

In another possible implementation of the embodiments of the present disclosure, the plurality of RV version numbers include 1^{st} to N^{th} RV version numbers, and the 1^{st} to N^{th} RV version numbers are arranged in a preset order, where N is a positive integer.

In another possible implementation of the embodiments of the present disclosure, N is 4, and the preset RV sequence is {0, 2, 3, 1}, where 0, 1, 2 and 3 are version numbers of the RV.

In another possible implementation of the embodiments of the present disclosure, the repetition indication message includes a repetition indication identifier. The sending module 52 is specifically configured to: obtain an i^{th} RV sent at a previous sending moment, where i is a positive integer less than or equal to N; in response to the repetition indication identifier being repeating, repeatedly send the i^{th} RV at a current sending moment; and in response to the repetition indication identifier being stopping repeating, determine an (i +1)^{th} RV based on the preset order, and send the (i +1)^{th} RV at the current sending moment.

In another possible implementation of the embodiments of the present disclosure, the repetition indication message is sent via downlink control information (DCI) or a medium access control (MAC) signaling.

In another possible implementation of the embodiments of the present disclosure, the repetition indication message includes a repetition indication identifier. The sending module 52 is specifically configured to: obtain an i^{th} RV sent at a previous sending moment, where i is a positive integer less than or equal to N; determine whether the repetition indication identifier is received at a current sending moment; in response to receiving the repetition indication identifier, determine an (i +1)^{th} RV based on the preset order, and send the (i +1)^{th} RV at the current sending moment; and in response to not receiving the repetition indication identifier, repeatedly send the i^{th} RV at the current sending moment.

In another possible implementation of the embodiments of the present disclosure, the apparatus further includes: a determining module.

The determining module is further configured to determine an initial RV.

The sending module 52 is further configured to determine the initial RV based on the initial RV indication message, and send the initial RV.

It needs to be noted that, the foregoing explanation of embodiments of the method for uplink coverage enhancement is also applicable to the apparatus for uplink coverage enhancement in the embodiment, with the same principle, which may not be repeated here.

According to the apparatus for uplink coverage enhancement in the embodiments of the present disclosure, the UE determines the initial RV that needs to be sent to the base station based on the obtained indication message of the initial RV sent by the base station, so that when a new connection is established, sending may be started from the initial RV of the RV sequence, and when the connection is disconnected and needs to be reconnected, an RV that needs to be sent is determined based on a number of connections, to increase the amount of obtained redundancy information and improve a success rate of decoding. Further, after the initial RV sent by the UE is determined, when decoding fails, the base station sends the repetition instruction message to indicate that the UE switches to the next RV based on the PUSCH channel quality measured by the base station, if the channel quality is good, to increase the amount of obtained redundancy information and improve a success rate of subsequent decoding by the base station. If the channel quality is poor, the repetition instruction message is sent to indicate that the UE continues repeatedly sending the RV sent last time, to ensure that the base station obtains the RV through repetition transmission, thus improving a success rate of decoding by the base station. Meanwhile, an RV repetition is flexibly determined, and a dynamical RV repetition solution is determined, which improves the coverage performance of the base station. The repetition indication information may be sent by DCI or MAC, and may be indicated by occupying one bit, thus reducing the overhead of the base station sending the repetition indication message, and improving the overall performance.

In order to achieve the above embodiments, an apparatus for uplink coverage enhancement is further provided in the present disclosure.

FIG. 6 is a diagram illustrating a structure of another apparatus for uplink coverage enhancement according to an embodiment of the present disclosure, which is applicable to a base station.

As illustrated in FIG. 6, the apparatus includes a detection module 61, a processing module 62 and a receiving module 63.

The detection module 61 is configured to detect a physical uplink shared channel (PUSCH) channel quality of a user equipment (UE).

The processing module 62 is configured to generate a repetition indication message based on the PUSCH channel quality, and send the repetition indication message to the UE.

The receiving module 63 is configured to receive a redundancy version (RV) sent by the UE based on the repetition indication message.

The RV refers to transmission of a version number corresponding to the RV.

In actual application, the apparatus for uplink coverage enhancement according to the embodiments of the present disclosure may be configured in any base station to perform the method for uplink coverage enhancement.

According to the apparatus for uplink coverage enhancement in the embodiments of the present disclosure, the physical uplink shared channel (PUSCH) channel quality of the UE is detected, the repetition indication message is generated based on the PUSCH channel quality, and sent to the UE. The RV sent by the UE based on the repetition indication message is received. The corresponding repetition indication message is generated based on the PUSCH channel quality measured by the base station, so that the UE determines whether to repeatedly send the RV sent last time or switch to the next RV based on the RV indicated in the repetition indication message. In this way, it is achieved that the RV repetition solution is flexibly determined, and the coverage performance of the base station is improved.

In a possible implementation of the present disclosure, the UE sends the RV to the base station in a preset RV sequence. The preset RV sequence includes a plurality of RV version numbers, and a number of repetitions of each of the plurality of RV version numbers is determined by the repetition indication message.

In a possible implementation of the present disclosure, the plurality of RV version numbers include 1^{st} to N^{th} RV version numbers, and the 1^{st} to N^{th} RV version numbers are arranged in a preset order, where N is a positive integer.

In a possible implementation of the present disclosure, N is 4, and the preset RV sequence is {0, 2, 3, 1}, where 0, 1, 2 and 3 are version numbers of the RV.

In a possible implementation of the present disclosure, the processing module 62 is specifically configured to: send the repetition indication message via downlink control information or a medium access control (MAC) signaling.

In a possible implementation of the present disclosure, the PUSCH channel quality of the UE is reflected by a signal noise ratio (SNR) or a modulation and coding scheme (MCS). The processing module 62 is specifically configured to: in response to determining that the PUSCH channel quality is greater than or equal to a preset threshold based on the SNR or the MCS, send a first repetition indication message for indicating the UE to switch to a next RV; and in response to determining that the PUSCH channel quality is less than the preset threshold based on the SNR or the MCS, send a second repetition indication message for indicating the UE to repeatedly send a current RV.

In a possible implementation of the present disclosure, the apparatus further includes a sending module.

The detection module 61 is configured to detect a transmission state with the UE.

The sending module is configured to send an initial RV indication message to the UE based on the transmission state.

In a possible implementation of the present disclosure, the sending module is specifically configured to: in response to the transmission state being a new transmission state, send a first initial RV indication message to the UE, in which the first initial RV indication message is configured to indicate the UE to send an RV0 at a first sending moment; and in response to the transmission state being a repetition transmission state, send a non-first initial RV indication message to the UE based on a number of transmission repetitions.

In a possible implementation of the present disclosure, the sending module is specifically configured to: in response to the number of transmission repetitions being one, send a second initial RV indication message to the UE, in which the second initial RV indication message is configured to indicate the UE to send an RV2 at the first sending moment; in response to the number of transmission repetitions being two, send a third initial RV indication message to the UE, in which the third initial RV indication message is configured to indicate the UE to send an RV3 at the first sending moment; and in response to the number of transmission repetitions being three, send a fourth initial RV indication message to the UE, in which the fourth initial RV indication message is configured to indicate the UE to send an RV1 at the first sending moment.

It needs to be noted that, the foregoing explanation of embodiments of the method for uplink coverage enhancement as illustrated in FIG. 3 and FIG. 4 is also applicable to the apparatus for uplink coverage enhancement of the base station in the embodiment, with the same principle, which may not be repeated here.

According to the apparatus for uplink coverage enhancement in the embodiments of the present disclosure, the UE determines the initial RV that needs to be sent to the base station based on the obtained indication message of the initial RV sent by the base station, so that when a new connection is established, sending may be started from the initial RV of the RV sequence, and when the connection is disconnected and needs to be reconnected, the RV that needs to be sent is determined based on a number of connections, to increase the amount of obtained redundancy information and improve a success rate of decoding. Further, after the initial RV sent by the UE is determined, when decoding fails, the base station sends the repetition instruction message to indicate that the UE switches to the next RV based on the PUSCH channel quality measured by the base station, if the channel quality is good, to increase the amount of obtained redundancy information and improve a success rate of subsequent decoding by the base station. If the channel quality is poor, the repetition instruction message is sent to indicate that the UE continues repeatedly sending the RV sent last time, to ensure that the base station obtains the RV by repetition transmission, thus improving a success rate of decoding by the base station. Meanwhile, an RV repetition is flexibly determined, and a dynamical RV repetition solution is determined, which improves a coverage performance of the base station. The repetition indication information may be sent by DCI or MAC, and may be indicated by occupying one bit, thus reducing the overhead of the base station sending the repetition indication message, and improving the overall performance.

In order to implement the above embodiment, a computer storage medium is further provided in the present disclosure.

A computer storage medium stored with an executable program is provided in the embodiments of the disclosure. The executable program is caused to implement the method for uplink coverage enhancement according to the above any technical solution when executed by a processor, for example, as illustrated in at least one of FIG. 1 to FIG. 4

FIG. 7 is a block diagram illustrating a communication device for uplink coverage enhancement in the embodiments of the present disclosure. The communication device is intended to represent various types of digital computers, such as laptop computers, desktop computers, workstations, personal digital assistants, servers, blade servers, mainframe computers, and other suitable computers. The communication device may also represent various types of mobile devices, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 7, the communication device includes: one or more processors 1100, a memory 1200, and an interface configured to connect various components, including a high-speed interface and a low-speed interface. The various components are connected to each other via different buses, and may be installed on a public main board or installed in other ways as needed. The processor may process instructions executed in the communication device, including instructions stored in or on the memory to display graphical information of the GUI on an external input/output device (such as a display device coupled to an interface). In other implementations, a plurality of processors and/or a plurality of buses may be used together with a plurality of memories if necessary. Similarly, the processor may connect a plurality of communication devices, and each device provides a part of necessary operations (for example, as a server array, a group of blade servers, or a multi-processor system). FIG. 7 takes one processor 1100 as an example.

The memory 1200 is a non-transitory computer-readable storage medium according to the present disclosure. The memory stores instructions executable by at least one processor, so that the at least one processor may perform the method for uplink coverage enhancement as described in the present disclosure. The non-transitory computer-readable storage medium of the present disclosure has stored computer instructions. The computer instructions are configured to cause a computer to perform the method for uplink coverage enhancement according to the present disclosure.

As a non-transitory computer-readable storage medium, the memory 1200 may be configured to store non-transitory software programs, non-transitory computer-executable programs and modules, such as program instructions/modules corresponding to the method for uplink coverage enhancement in the embodiments of the present disclosure (for example, the receiving module 51 and the sending module 52 as illustrated in FIG. 5, or the detection module 61, the processing module 62 and the receiving module 63 as illustrated in FIG. 6). The processor 1100 executes various function applications and data processing of the server by running a non-transitory software program, an instruction, and a module stored in the memory 1200, that is, the method for uplink coverage enhancement in the above method embodiments is implemented.

The memory 1200 may include a program storage area and a data storage area. The program storage area may store operation systems and application programs required by at least one function. The data storage area may store data created based on the use of a positioning communication device, etc. In addition, the memory 1200 may include a high-speed random access memory, and may also include a non-transitory memory, such as at least one magnetic disk storage device, a flash memory device, or other non-transitory solid-state storage devices. In some embodiments, the memory 1200 optionally includes a memory set remotely relative to the processor 1100 that may be connected to a positioning communication device via a network. The example of the above networks includes but not limited to the Internet, an enterprise intranet, a local area network, a mobile communication network and their combination.

The communication device for transmission of a physical uplink shared channel (PUSCH) may further include: an input device 1300 and an output device 1400. The processor 1100, the memory 1200, the input device 1300, and the output device 1400 may be connected through a bus or in other ways. FIG. 7 takes the connection being through a bus as an example.

The input device 1300 may receive the inputted digital or character information, and generate a key signal input related to the user settings and function control of the positioning communication device, such as a touch screen, a keypad, a mouse, a track pad, a touch pad, an indicating rod, one or more mouse buttons, a trackball, a joystick and other input devices. The output device1400 may include a display device, an auxiliary lighting device (for example, a LED) and a tactile feedback device (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or their combinations. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input device, and at least one output device, and transmit the data and instructions to the storage system, the at least one input device, and the at least one output device.

The computer programs (also called as programs, software, software applications, or codes) include machine instructions of the programmable processor, and may be implemented with a high-level procedure and/or object-oriented programming languages, and/or assembly/machine languages. As used herein, the terms "machine-readable medium" and "computer-readable medium" refer to any computer program product, device, and/or apparatus configured to provide the machine instructions and/or data for the programmable processor, for example, a magnetic disk, an optical disk, a memory, a programmable logic device (PLD), including a machine-readable medium that receive machine instructions as machine-readable signals. The term "a machine-readable signal" refers to any signal configured to provide the machine instructions and/or data for the programmable processor.

In order to provide interaction with the user, the systems and technologies described here may be implemented on a computer. The computer has: a display device for displaying information to the user (for example, a CRT (cathode ray tube) or a LCD (liquid crystal display) monitor); and a keyboard and a pointing device (for example, a mouse or a trackball) through which the user may provide input to the computer. Other types of devices may further be configured to provide interaction with the user. For example, the feedback provided to the user may be any form of sensory feedback (for example, a visual feedback, an auditory feedback, or a tactile feedback). The input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or a computing system including any combination of such back-end components, middleware components or front-end components. The system components may be connected to each other through any form or any medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relation between the client and the server is generated by computer programs that run on the corresponding computer and have a client-server relationship with each other.

In the present disclosure, UE receives the repetition indication message related to repetition transmission sent by the base station, and sends the redundancy version corresponding to the repetition indication message to the base station via the uplink channel based on the repetition indication message related to repetition transmission. Thus, a dynamically changing RV solution is set on the basis of the repetition indication message sent by the base station. Since the repetition indication message sent by the base station is determined based on a success situation of decoding and a channel quality, the accuracy of the RV repetition solution is improved, and the uplink enhancement coverage is improved.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A method for uplink coverage enhancement, performed by a user equipment, UE, the method comprising:
receiving (101, 203) a repetition indication message related to repetition transmission sent by a base station; and
sending (102, 204) a redundancy version, RV, corresponding to the repetition indication message to the base station via an uplink channel based on the repetition indication message;
**characterized in that**, the repetition indication message comprises a repetition indication identifier, and sending the RV corresponding to the repetition indication message to the base station via the uplink channel, comprises:
obtaining an i^{th} RV sent at a previous sending moment, where i is a positive integer;
determining the repetition indication identifier is repeating, and repeatedly sending the i^{th} RV at a current sending moment; and
determining the repetition indication identifier is stopping repeating, determining an (i +1)^{th} RV based on a preset order, and sending the (i +1)^{th} RV at the current sending moment.

2. The method according to claim 1, wherein sending the RV corresponding to the repetition indication message to the base station via the uplink channel comprises:
sending a preset RV sequence to the base station, wherein the preset RV sequence comprises a plurality of RV version numbers, and a number of repetitions of each of the plurality of RV version numbers is determined by the repetition indication message.

3. The method according to claim 2, wherein the plurality of RV version numbers comprise 1^{st} to N^{th} RV version numbers, and the 1^{st} to N^{th} RV version numbers are arranged in the preset order, where N is a positive integer.

4. The method according to claim 3, wherein N is 4, and the preset RV sequence is {0, 2, 3, 1}, where 0, 1, 2 and 3 are version numbers of the RV.

5. The method according to claim 1, wherein the repetition indication message is sent via downlink control information, DCI, or a medium access control, MAC, signaling.

6. The method according to claim 3, further comprising:
determining (201) an initial RV; and
sending (202) the initial RV at a first sending moment.

7. A method for uplink coverage enhancement, performed by a base station, the method comprising:
detecting (301, 403) a physical uplink shared channel, PUSCH, channel quality of a user equipment, UE;
generating (302, 404) a repetition indication message based on the PUSCH channel quality;
sending the repetition indication message to the UE; and
receiving (303, 405) a redundancy version, RV, sent by the UE based on the repetition indication message;
**characterized in that**, the repetition indication message comprises a repetition indication identifier, and
in response to the repetition indication identifier indicates repeating, the UE is caused to repeatedly send an i^{th} RV sent at a previous sending moment, where i is a positive integer, or
in response to the repetition indication identifier being stopping repeating, the UE is caused to determine an (i +1)^{th} RV based on the preset order, and send the (i +1)^{th} RV at the current sending moment.

8. The method according to claim 7, wherein the UE sends the RV to the base station in a preset RV sequence, the preset RV sequence comprises a plurality of RV version numbers, and a number of repetitions of each of the plurality of RV version numbers is determined by the repetition indication message.

9. The method according to claim 8, wherein preferably the plurality of RV version numbers comprises 1^{st} to N^{th} RV version numbers, and the 1^{st} to N^{th} RV version numbers are arranged in the preset order, where N is a positive integer.

10. The method according to claim 9, wherein N is 4, and the preset RV sequence is {0, 2, 3, 1}, where 0, 1, 2 and 3 are version numbers of the RV.

11. The method according to claim 7, wherein sending the repetition indication message to the UE, comprises:
sending the repetition indication message via downlink control information, DCI, or a medium access control, MAC, signaling.

12. The method according to claim 7, wherein the PUSCH channel quality of the UE is reflected by a signal noise ratio, SNR, or a modulation and coding scheme, MCS, and generating the repetition indication message based on the PUSCH channel quality, comprises:
determining that the PUSCH channel quality is greater than or equal to a preset threshold, and sending a first repetition indication message for indicating the UE to switch to a next RV; and
determining that the PUSCH channel quality is less than the preset threshold based on the SNR or the MCS, and sending a second repetition indication message for indicating the UE to repeatedly send a current RV.

13. The method according to any one of claims 7 to 10, further comprising:
detecting (401) a transmission state with the UE;
sending a first initial RV indication message to the UE, wherein the first initial RV indication message is configured to indicate the UE to send an RV0 at a first sending moment, and the transmission state is a new transmission state; and
sending a non-first initial RV indication message to the UE based on a number of transmission repetitions, wherein the transmission state is a repetition transmission state.

14. The method according to claim 13, wherein sending the non-first initial RV indication message to the UE based on the number of transmission repetitions, comprises:
sending a second initial RV indication message to the UE, wherein the second initial RV indication message is configured to indicate the UE to send an RV2 at the first sending moment and the number of transmission repetitions is one;
sending a third initial RV indication message to the UE, wherein the third initial RV indication message is configured to indicate the UE to send an RV3 at the first sending moment and the number of transmission repetitions is two; and
sending a fourth initial RV indication message to the UE, wherein the fourth initial RV indication message is configured to indicate the UE to send an RV1 at the first sending moment and the number of transmission repetitions is three.

15. A communication device, comprising: a transceiver, a memory and a processor respectively connected to the transceiver and the memory, wherein the processor is configured to control transceiving of a wireless signal of the transceiver and implement the method of any one of claims 1 to 6 or the method of any one of claims 7 to 14, by performing computer executable instructions on the memory.

## Patentansprüche

1. Verfahren zur Verbesserung der Uplink-Abdeckung, das von einem Benutzerendgerät, UE, durchgeführt wird, wobei das Verfahren umfasst:
Empfangen (101, 203) einer von einer Basisstation gesendeten Wiederholungsanzeigenachricht, die sich auf eine Wiederholungsübertragung bezieht; und
Senden (102, 204) einer Redundanzversion, RV, die der Wiederholungsanzeigenachricht entspricht, an die Basisstation über einen Uplink-Kanal basierend auf der Wiederholungsanzeigenachricht;
**dadurch gekennzeichnet, dass** die Wiederholungsanzeigenachricht eine Wiederholungsanzeigekennung aufweist und das Senden des der Wiederholungsanzeigenachricht entsprechenden RV an die Basisstation über den Uplink-Kanal umfasst:
Erhalten einer i-ten RV, die zu einem früheren Sendezeitpunkt gesendet wurde, wobei i eine positive ganze Zahl ist;
Feststellen, dass sich die Wiederholungsanzeigekennung wiederholt, und wiederholtes Senden der i-ten RV zum aktuellen Sendezeitpunkt; und
Feststellen, dass die Wiederholungsanzeigekennung die Wiederholung beendet, Bestimmen einer (i+1)-ten RV basierend auf einer voreingestellten Reihenfolge, und Senden der (i+1)-ten RV zum aktuellen Sendezeitpunkt.

2. Verfahren nach Anspruch 1, wobei das Senden der RV, die der Wiederholungsanzeigenachricht entspricht, an die Basisstation über den Uplink-Kanal umfasst:
Senden einer voreingestellten RV-Sequenz an die Basisstation, wobei die voreingestellte RV-Sequenz eine Vielzahl von RV-Versionsnummern aufweist und eine Anzahl von Wiederholungen jeder der Vielzahl von RV-Versionsnummern mittels der Wiederholungsanzeigenachricht ermittelt wird.

3. Verfahren nach Anspruch 2, wobei die Vielzahl von RV-Versionsnummern die erste bis N-te RV-Versionsnummer umfassen und die erste bis N-te RV-Versionsnummer in der voreingestellten Reihenfolge angeordnet sind, wobei N eine positive ganze Zahl ist.

4. Verfahren nach Anspruch 3, wobei N gleich 4 ist und die voreingestellte RV-Sequenz {0, 2, 3, 1} ist, wobei 0, 1, 2 und 3 Versionsnummern der RV sind.

5. Verfahren nach Anspruch 1, wobei die Wiederholungsanzeigenachricht über Downlink-Steuerinformationen, DCI, oder eine Medium-Access-Control-, MAC, Signalisierung gesendet wird.

6. Verfahren nach Anspruch 3, das ferner umfasst:
Bestimmen (201) einer anfänglichen RV; und
Senden (202) der anfänglichen RV zu einem ersten Sendezeitpunkt.

7. Verfahren zur Verbesserung der Uplink-Abdeckung, das von einer Basisstation durchgeführt wird, wobei das Verfahren umfasst:
Ermitteln (301, 403) der Kanalqualität eines Physical Uplink Shared Channel, PUSCH, eines Benutzerendgeräts, UE;
Erzeugen (302, 404) einer Wiederholungsanzeigenachricht basierend auf der PUSCH-Kanalqualität;
Senden der Wiederholungsanzeigenachricht an das UE; und
Empfangen (303, 405) einer Redundanzversion, RV, die von dem UE basierend auf der Wiederholungsanzeigenachricht gesendet wird;
**dadurch gekennzeichnet, dass** die Wiederholungsanzeigenachricht eine Wiederholungsanzeigekennung aufweist, und
als Reaktion darauf, dass die Wiederholungsanzeigekennung eine Wiederholung anzeigt, das UE dazu veranlasst wird, eine i-te RV wiederholt zu senden, die zu einem früheren Sendezeitpunkt gesendet wurde, wobei i eine positive ganze Zahl ist, oder als Reaktion darauf, dass die Wiederholungsanzeigekennung die Wiederholung beendet, das UE dazu veranlasst wird, eine (i+1)-te RV basierend auf einer voreingestellten Reihenfolge zu bestimmen und die (i+1)-te RV zum aktuellen Sendezeitpunkt zu senden.

8. Verfahren nach Anspruch 7, wobei das UE die RV in einer voreingestellten RV-Sequenz an die Basisstation sendet, wobei die voreingestellte RV-Sequenz eine Vielzahl von RV-Versionsnummern aufweist und eine Anzahl von Wiederholungen jeder der Vielzahl von RV-Versionsnummern mittels der Wiederholungsanzeigenachricht ermittelt wird.

9. Verfahren nach Anspruch 8, wobei die Vielzahl von RV-Versionsnummern vorzugsweise die erste bis N-te RV-Versionsnummer umfasst und die erste bis N-te RV-Versionsnummer in der voreingestellten Reihenfolge angeordnet sind, wobei N eine positive ganze Zahl ist.

10. Verfahren nach Anspruch 9, wobei N gleich 4 ist und die voreingestellte RV-Sequenz {0, 2, 3, 1} ist, wobei 0, 1, 2 und 3 Versionsnummern der RV sind.

11. Verfahren nach Anspruch 7, wobei das Senden der Wiederholungsanzeigenachricht an das UE umfasst:
Senden der Wiederholungsanzeigenachricht über Downlink-Steuerinformationen, DCI, oder eine Medium-Access-Control-, MAC, Signalisierung.

12. Verfahren nach Anspruch 7, wobei die PUSCH-Kanalqualität des UE durch ein Signal-Rausch-Verhältnis, SNR, oder ein Modulations- und Codierungsschema, MCS, wiedergegeben wird und das Erzeugen der Wiederholungsanzeigenachricht basierend auf der PUSCH-Kanalqualität umfasst:
Feststellen, dass die PUSCH-Kanalqualität größer oder gleich einem voreingestellten Schwellenwert ist, und Senden einer ersten Wiederholungsanzeigenachricht, um dem UE anzuzeigen, dass es zu einer nächsten RV wechseln soll; und
Feststellen, dass die PUSCH-Kanalqualität unterhalb des voreingestellten Schwellenwerts liegt, basierend auf dem SNR oder dem MCS, und Senden einer zweiten Wiederholungsanzeigenachricht, um dem UE anzuzeigen, dass es eine aktuelle RV senden soll.

13. Verfahren nach einem der Ansprüche 7 bis 10, das ferner umfasst:
Ermitteln (401) eines Übertragungszustands mit dem UE;
Senden einer ersten anfänglichen RV-Anzeigenachricht an das UE, wobei die erste anfängliche RV-Anzeigenachricht so ausgebildet ist, dass sie dem UE anzeigt, zu einem ersten Sendezeitpunkt eine RV0 zu senden, und der Übertragungszustand ein neuer Übertragungszustand ist; und
Senden einer anfänglichen RV-Anzeigenachricht, die nicht die erste ist, an das UE basierend auf einer Anzahl von Übertragungswiederholungen, wobei der Übertragungszustand ein Wiederholungsübertragungszustand ist.

14. Verfahren nach Anspruch 13, wobei das Senden der anfänglichen RV-Anzeigenachricht, die nicht die erste ist, an das UE basierend auf der Anzahl von Übertragungswiederholungen umfasst:
Senden einer zweiten anfänglichen RV-Anzeigenachricht an das UE, wobei die zweite anfängliche RV-Anzeigenachricht so ausgebildet ist, dass sie dem UE anzeigt, zum ersten Sendezeitpunkt eine RV2 zu senden, und die Anzahl der Übertragungswiederholungen eins beträgt;
Senden einer dritten anfänglichen RV-Anzeigenachricht an das UE, wobei die dritte anfängliche RV-Anzeigenachricht so ausgebildet ist, dass sie dem UE anzeigt, zum ersten Sendezeitpunkt eine RV3 zu senden, und die Anzahl der Übertragungswiederholungen zwei beträgt; und
Senden einer vierten anfänglichen RV-Anzeigenachricht an das UE, wobei die vierte anfängliche RV-Anzeigenachricht so ausgebildet ist, dass sie dem UE anzeigt, zum ersten Sendezeitpunkt eine RV1 zu senden, und die Anzahl der Übertragungswiederholungen drei beträgt.

15. Kommunikationsvorrichtung, die aufweist: einen Transceiver, einen Speicher und einen Prozessor, der mit dem Transceiver und dem Speicher verbunden ist, wobei der Prozessor so ausgebildet ist, dass er das Senden und Empfangen eines drahtlosen Signals des Transceivers steuert und das Verfahren nach einem der Ansprüche 1 bis 6 oder das Verfahren nach einem der Ansprüche 7 bis 14 implementiert, indem er computerausführbare Befehle im Speicher ausführt.

## Revendications

1. Procédé d'amélioration de couverture de liaison montante, mis en œuvre par un équipement d'utilisateur, dit UE, le procédé comprenant les étapes consistant à :
recevoir (101, 203) un message d'indication de répétition associé à une transmission de répétition envoyée par une station de base ; et
envoyer (102, 204) une version de redondance, dite RV, correspondant au message d'indication de répétition à la station de base par le biais d'un canal de liaison montante sur la base du message d'indication de répétition ;
**caractérisé en ce que**, le message d'indication de répétition comprend un identifiant d'indication de répétition, et l'étape d'envoi de la RV correspondant au message d'indication de répétition à la station de base par le biais du canal de liaison montante, consiste à :
obtenir une i^{ème} RV envoyée à un moment d'envoi précédent, où i est un nombre entier positif ;
déterminer que l'identifiant d'indication de répétition est répété, et envoyer de manière répétée la i^{ème} RV à un moment d'envoi courant ; et
déterminer que la répétition de l'identifiant d'indication de répétition est arrêtée, déterminer une (i+1)^{ième} RV sur la base d'un ordre prédéfini, et envoyer la (i+1)^{ième} RV au moment d'envoi courant.

2. Procédé selon la revendication 1, dans lequel l'étape d'envoi de la RV correspondant au message d'indication de répétition à la station de base par le biais du canal de liaison montante consiste à :
envoyer une séquence de RV prédéfinie à la station de base, dans lequel la séquence de RV prédéfinie comprend une pluralité de numéros de version de RV, et un nombre de répétitions de chaque numéro de la pluralité de numéros de version de RV est déterminé par le message d'indication de répétition.

3. Procédé selon la revendication 2, dans lequel les numéros de la pluralité de numéros de version de RV comprennent des 1^{er} à N^{ième} numéros de version de RV, et les 1^{er} à N^{ième} numéros de version de RV sont organisés dans l'ordre prédéfini, où N est un nombre entier positif.

4. Procédé selon la revendication 3, dans lequel N est 4, et la séquence de RV prédéfinie est {0, 2, 3, 1}, où 0, 1, 2 et 3 sont des numéros de version de la RV.

5. Procédé selon la revendication 1, dans lequel le message d'indication de répétition est envoyé par le biais d'informations de commande de liaison descendante, dites DCI, ou d'une signalisation de commande d'accès au support, dite MAC.

6. Procédé selon la revendication 3, comprenant en outre les étapes consistant à :
déterminer (201) une RV initiale ; et
envoyer (202) la RV initiale à un premier moment d'envoi.

7. Procédé d'amélioration de couverture de liaison montante, mis en œuvre par une station de base, le procédé comprenant les étapes consistant à :
détecter (301, 403) une qualité de canal de canal physique partagé de liaison montante, dit PUSCH, d'un équipement d'utilisateur, dit UE ;
générer (302, 404) un message d'indication de répétition sur la base de la qualité de canal de PUSCH ;
envoyer le message d'indication de répétition à l'UE ; et
recevoir (303, 405) une version de redondance, dite RV, envoyée par l'UE sur la base du message d'indication de répétition ;
**caractérisé en ce que**, le message d'indication de répétition comprend un identifiant d'indication de répétition, et
en réponse au fait que l'identifiant d'indication de répétition indique une répétition, l'UE est amené à envoyer de manière répétée une i^{ème} RV envoyée à un moment d'envoi précédent, où i est un nombre entier positif, ou
en réponse au fait que la répétition de l'identifiant d'indication de répétition est arrêtée, l'UE est amené à déterminer une (i+1)^{ième} RV sur la base de l'ordre prédéfini, et à envoyer la (i+1)^{ième} RV au moment d'envoi courant.

8. Procédé selon la revendication 7, dans lequel l'UE envoie la RV à la station de base dans une séquence de RV prédéfinie, la séquence de RV prédéfinie comprend une pluralité de numéros de version de RV, et un nombre de répétitions de chaque numéro de la pluralité de numéros de version de RV est déterminé par le message d'indication de répétition.

9. Procédé selon la revendication 8, dans lequel, de préférence, les numéros de la pluralité de numéros de version de RV comprennent des 1^{er} à N^{ième} numéros de version de RV, et les 1^{er} à N^{ième} numéros de version de RV sont organisés dans l'ordre prédéfini, où N est un nombre entier positif.

10. Procédé selon la revendication 9, dans lequel N est 4, et la séquence de RV prédéfinie est {0, 2, 3, 1}, où 0, 1, 2 et 3 sont des numéros de version de la RV.

11. Procédé selon la revendication 7, dans lequel l'étape d'envoi du message d'indication de répétition à l'UE, consiste à :
envoyer le message d'indication de répétition par le biais d'informations de commande de liaison descendante, dites DCI, ou d'une signalisation de commande d'accès au support, dite MAC.

12. Procédé selon la revendication 7, dans lequel la qualité de canal de PUSCH de l'UE est exprimée par un rapport signal sur bruit, dit SNR, ou par un schéma de modulation et de codage, dit MCS, et l'étape de génération du message d'indication de répétition sur la base de la qualité de canal de PUSCH, consiste à :
déterminer que la qualité de canal de PUSCH est supérieure ou égale à un seuil prédéfini, et envoyer un premier message d'indication de répétition destiné à indiquer à l'UE de passer à une RV suivante ; et
déterminer que la qualité de canal de PUSCH est inférieure au seuil prédéfini sur la base du SNR ou du MCS, et envoyer un deuxième message d'indication de répétition destiné à indiquer à l'UE d'envoyer de manière répétée une RV courante.

13. Procédé selon l'une quelconque des revendications 7 à 10, comprenant en outre les étapes consistant à :
détecter (401) un état de transmission avec l'UE ;
envoyer un premier message d'indication de RV initiale à l'UE, dans lequel le premier message d'indication de RV initiale est configuré pour indiquer à l'UE d'envoyer une RV0 à un premier moment d'envoi, et l'état de transmission est un nouvel état de transmission ; et
envoyer un message d'indication de RV initiale, autre que le premier message, à l'UE sur la base d'un nombre de répétitions de transmission, dans lequel l'état de transmission est un état de transmission de répétition.

14. Procédé selon la revendication 13, dans lequel l'étape d'envoi du message d'indication de RV initiale, autre que le premier message, à l'UE sur la base du nombre de répétitions de transmission, consiste à :
envoyer un deuxième message d'indication de RV initiale à l'UE, dans lequel le deuxième message d'indication de RV initiale est configuré pour indiquer à l'UE d'envoyer une RV2 au premier moment d'envoi et le nombre de répétitions de transmission est de un ;
envoyer un troisième message d'indication de RV initiale à l'UE, dans lequel le troisième message d'indication de RV initiale est configuré pour indiquer à l'UE d'envoyer une RV3 au premier moment d'envoi et le nombre de répétitions de transmission est de deux ; et
envoyer un quatrième message d'indication de RV initiale à l'UE, dans lequel le quatrième message d'indication de RV initiale est configuré pour indiquer à l'UE d'envoyer une RV1 au premier moment d'envoi et le nombre de répétitions de transmission est de trois.

15. Dispositif de communication, comprenant : un émetteur-récepteur, une mémoire et un processeur connecté respectivement à l'émetteur-récepteur et à la mémoire, dans lequel le processeur est configuré pour commander une émission-réception d'un signal sans fil de l'émetteur-récepteur et pour mettre en œuvre le procédé selon l'une quelconque des revendications 1 à 6 ou le procédé selon l'une quelconque des revendications 7 à 14, en exécutant des instructions exécutables par ordinateur maintenues dans la mémoire.
